(19) Europäisches Patentamt
European Patent Office
Office européen des brevets

(11) **EP 1 833 259 A1**

(12) **EUROPEAN PATENT APPLICATION**
published in accordance with Art. 158(3) EPC

(43) Date of publication:
**12.09.2007 Bulletin 2007/37**

(51) Int Cl.:
**H04N 7/32** (2006.01)

(21) Application number: **05816571.3**

(22) Date of filing: **15.12.2005**

(86) International application number:
**PCT/JP2005/023080**

(87) International publication number:
**WO 2006/070614 (06.07.2006 Gazette 2006/27)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2004 JP 2004379777**

(71) Applicant: **NEC Corporation**
**Minato-ku**
**Tokyo 108-8001 (JP)**

(72) Inventors:
• **CHONO, Keiichi,**
**c/o NEC Corporation**
**Tokyo 1088001 (JP)**
• **SENDA, Yuzo,**
**c/o NEC Corporation**
**Tokyo 1088001 (JP)**

(74) Representative: **Wenzel & Kalkoff**
**Patentanwälte**
**Postfach 73 04 66**
**D-22124 Hamburg (DE)**

(54) **IMAGE ENCODING APPARATUS, IMAGE ENCODING METHOD AND PROGRAM THEREOF**

(57) An object to be attained by the present invention is to provide an image encoding technology for reducing the number of transform operations required in SATD calculation in intra-frame predictive direction estimation using a method involving no image quality degeneration.

An image encoding apparatus of the present invention transforms an input pixel block having NxM pixels into N×M transform coefficients; locally transforms an intra-frame predicted pixel block having N×M pixels based on the property of intra-frame prediction; and detects the best intra-frame predictive direction by comparing transform coefficients of the transformed input pixel block with transform coefficients of an intra-frame predicted pixel block in each intra-frame predictive direction.

FIG. 8

**Description**

**TECHNICAL FIELD**

The present invention relates to an image encoding technology, and more particularly, to an image encoding technology for accumulating image signals.

**BACKGROUND**

Conventional image encoding apparatuses generate a sequence of encoded information, i.e., a bit stream, by digitizing image signals input from the outside and then performing encoding processing in conformity with a certain image encoding scheme. One image encoding scheme is ISO/IEC 14496-10, Advanced Video Coding, which was recently approved as a standard (see Non-patent Document 1, for example). Moreover, one known reference model in development of an encoder according to Advanced Video Coding is a JM (Joint Model) scheme.

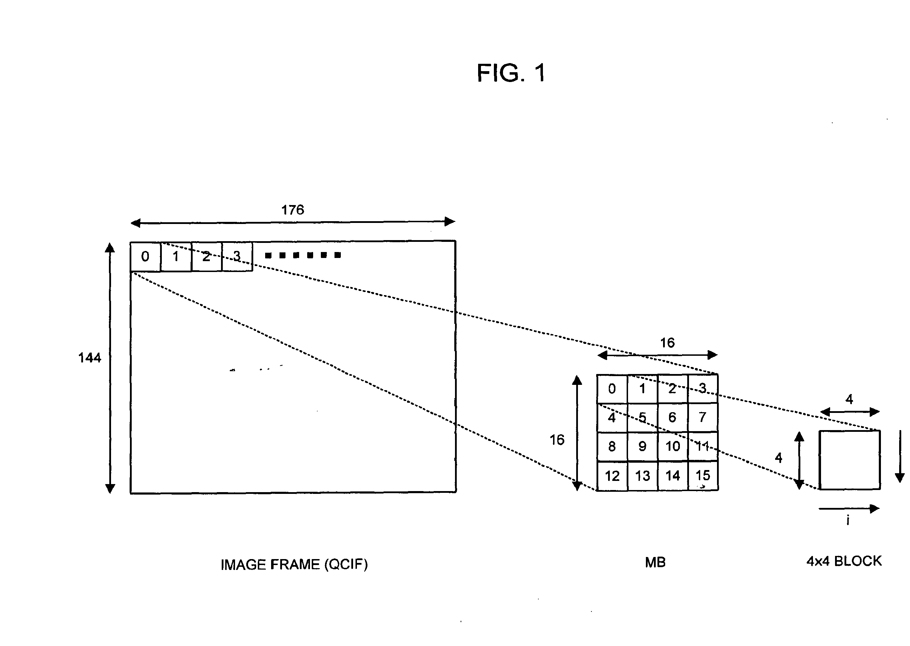

In the JM scheme, an image frame is divided into blocks each having a size of $16 \times 16$ pixels, which block is referred to as MB (Macro Block), and each MB is divided into blocks each having a size of $4 \times 4$ pixels (which will be referred to as $4 \times 4$ blocks hereinbelow), each block being used as an elemental unit for coding. FIG. 1 is an example of block division on an image frame in QCIF (Quarter Common Intermediate Format). It should be noted that although an ordinary image frame is composed of brightness signals and color difference signals, the following description will address only brightness signals for simplification.

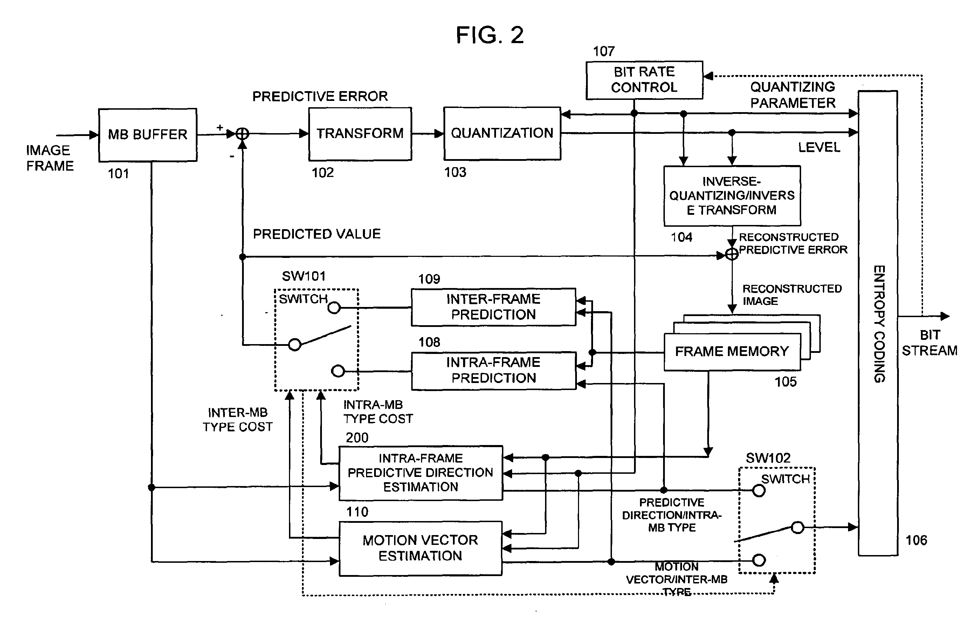

FIG. 2 is a schematic block diagram showing an example of a conventional image coding apparatus. The operation in the JM scheme in which an image frame is input and a bit stream is output will now be described with reference to FIG. 2.

Referring to FIG. 2, the JM scheme is comprised of an MB buffer 101, a transforming section 102, a quantizing section 103, an inverse-quantizing/inverse-transforming section 104, a frame memory 105, an entropy coding section 106, a bit rate control section 107, an intra-frame predicting section 108, an inter-frame predicting section 109, an inter-frame predicting section 110, an intra-frame predictive direction estimating section 200, and switches SW101 and SW102. It should be noted that although an actual JM scheme further comprises an in-loop filter, it is omitted for simplification.

The operation of each component will now be described.

The MB buffer 101 stores pixel values (which will be collectively referred to as an input image hereinbelow) in an MB to be encoded of an input image frame. From the input image supplied by the MB buffer 101 is subtracted predicted values supplied by the inter-frame predicting section 109 or intra-frame predicting section 108. The input image from which the predicted values are subtracted is called a predictive error. The predictive error is supplied to the transforming section 102. A collection of pixels composed of predicted values will be called predicted pixel block hereinbelow.

In inter-frame prediction, a current block to be encoded is predicted in a pixel space with reference to a current image frame to be encoded and an image frame reconstructed in the past whose display time is different. An MB encoded using inter-frame prediction will be called inter-MB. In intra-frame prediction, a current block to be encoded is predicted in a pixel space with reference to a current image frame to be encoded and an image frame reconstructed in the past whose display time is the same. An MB encoded using intra-frame prediction will be called intra-MB. An encoded image frame exclusively composed of intra-MB s will be called I frame, and an encoded image frame composed of intra-MB s or inter-MB s will be called P frame.

The transforming section 102 two-dimensionally transforms the predictive error from the MB buffer 101 for each $4 \times 4$ block, thus achieving transform from a spatial domain into a frequency domain. The predictive error signal transformed into the frequency domain is generally called transform coefficient. Two-dimensional transform that may be used is orthogonal transform such as DCT (Discrete Cosine Transform) or Hadamard transform, and the JM scheme employs integer-precision DCT in which the basis is expressed in an integer.

On the other hand, the bit rate control section 107 monitors the number of bits of a bit stream output by the entropy coding section 106 for the purpose of coding the input image frame in a desired number of bits. If the number of bits of the output bit stream is greater than the desired number of bits, a quantizing parameter indicating a larger quantization step size is output, and if the number of bits of the output bit stream is smaller than the desired number of bits, a quantizing parameter indicating a smaller quantization step size is output. The bit rate control section 107 thus achieves coding such that the output bit stream has a number of bits closer to the desired number of bits.

The quantizing section 103 quantizes the transform coefficients from the transforming section 102 with a quantization step size corresponding to the quantizing parameter supplied by the bit rate control section 107. The quantized transform coefficients are sometimes referred to as levels, whose values are entropy-encoded by the entropy coding section 106 and output as a sequence of bits, i.e., bit stream. Moreover, the quantizing parameter is also output as a bit stream by the entropy coding section 106, for inverse quantization in a decoding portion.

The inverse-quantizing/inverse-transforming section 104 applies inverse quantization on the levels supplied by the quantizing section 103 for subsequent coding, and further applies inverse two-dimensional transform such that the original spatial domain is recovered. The predictive error recovering its original spatial domain has distortion incorporated therein by quantization, and thus, it is called reconstructed predictive error.

The frame memory 105 stores values representing reconstructed predictive error added with predicted values as a reconstructed image. The reconstructed image stored is referred to in producing predicted values in subsequent intra-frame prediction and inter-frame prediction, and therefore, it is sometimes called reference frame.

The inter-frame predicting section 109 generates inter-frame predictive signals from the reference frame stored in the frame memory 105 based on an inter-MB type and a motion vector supplied by the motion vector estimating section 110.

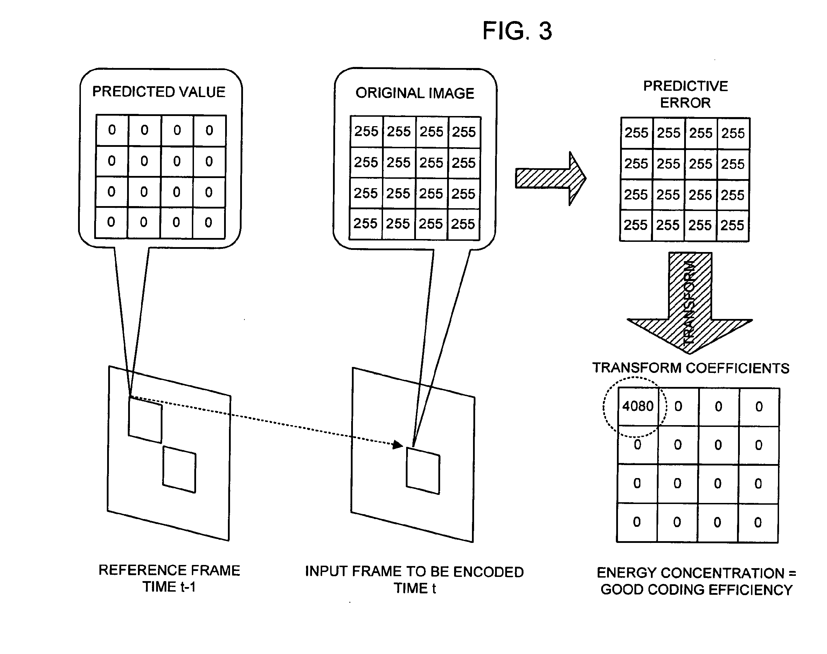

The motion vector estimating section 110 detects an inter-MB type and a motion vector that generate inter-frame predicted values with a minimum inter-MB type cost. In the JM scheme or in Patent Document 1, high image quality is achieved by, as the inter-MB type cost, not simply using SAD (Sum of Absolute Difference) of the predictive error signals but using an absolute sum, SATD (Sum of Absolute Transformed Difference), of the transform coefficients for the predictive error signals obtained by transforming the predictive error signals by Hadamard transform or the like. For example, in a case as shown in FIG. 3, simple calculation of SAD results in a large value. However, in FIG. 3, since the predictive error signals have concentrated energy in a DC (Direct Current) component after transform, the number of bits is not so large after entropy coding albeit the value of SAD is large. Thus, coding efficiency is better when SATD is used, where an effect of subsequent transform is incorporated, than that when SAD is simply used. Moreover, ideally, transform (integer-precision DCT in the JM scheme) that is the same as that in an actual encoder is desirably used for transform of SATD, but Hadamard transform that employs simpler calculation is used for SATD in the JM scheme or in Patent Document 1 for the purpose of reducing the amount of calculation. Even if Hadamard transform that employs simpler calculation is used for SATD, however, there still remains a problem that the amount of calculation is increased by the amount of calculation in Hadamard transform as compared with the case using SAD.

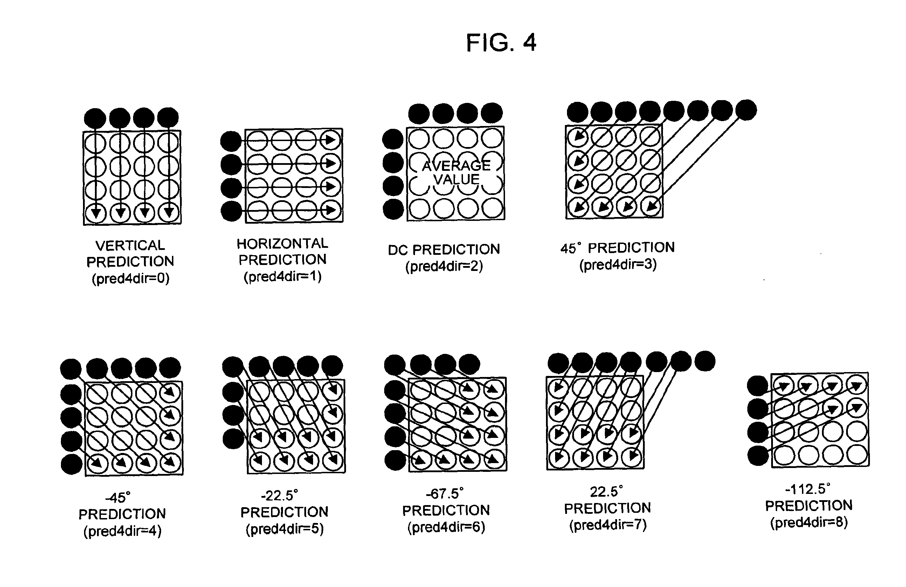

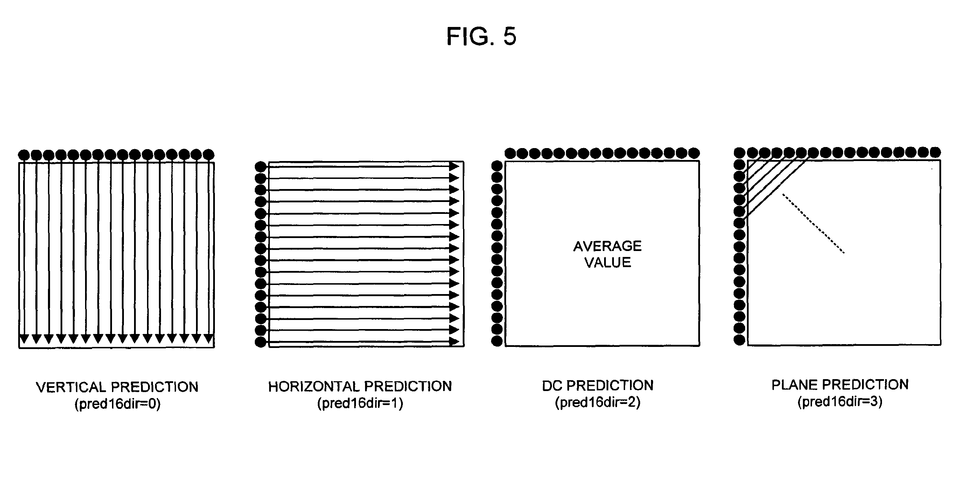

The intra-frame predicting section 108 generates intra-frame predictive signals from the reference frame stored in the frame memory 105 based on an intra-MB type and a predictive direction supplied by the intra-frame predictive direction estimating apparatus 200. It should be noted that types of intra-MB's (the type of MB's will be called MB type hereinbelow) in the JM scheme include an MB type for which intra-frame prediction is performed using adjacent pixels on an MB to be encoded on an MB-by-MB basis (which will be called Intra16MB hereinbelow), and an MB type for which intra-frame prediction is performed using adjacent pixels on a 4×4 block in an MB to be encoded on a block-by-block basis (which will be called Intra4MB hereinbelow). For Intra4MB, intra-frame prediction is possible using nine intra-frame predictive directions as shown in FIG. 4. For Intra16MB, intra-frame prediction is possible using four intra-frame predictive directions as shown in FIG. 5.

The intra-frame predictive direction estimating section 200 detects an intra-MB type and a predictive direction with a minimum intra-MB type cost. For the intra-MB type cost, SATD is used instead of SAD, as in the inter-MB, whereby an intra-MB type and a predictive direction effective to achieve high image quality coding can be selected.

The switch SW101 compares the intra-MB type cost supplied by the intra-frame predictive direction estimation 200 with the inter-MB type cost supplied by the motion vector estimation 110 to select a predicted value of an MB type with a smaller cost.

The switch SW102 monitors the predicted value selected by the switch SW101, and if inter-frame prediction is selected, it supplies the inter-MB type and motion vector supplied by the motion vector estimating section 110 to the entropy coding section 106. If intra-frame prediction is selected, the switch SW102 supplies the intra-MB type and predictive direction supplied by the intra-frame predictive direction estimating section 200 to the entropy coding section 106.

The JM scheme thus encodes an image frame with high quality by sequentially performing the processing above on an input MB.

Non-patent Document 1: ISO/IEC 14496-10 Advanced Video Coding

Patent Document 1: Japanese Patent Application Laid Open No. 2004-229315

## DISCLOSURE OF THE INVENTION

## PROBLEMS TO BE SOLVED BY THE INVENTION

As described above, if SATD is used for the cost in intra-frame predictive direction estimation and inter-frame prediction, a number of transform operations is required corresponding to the number of intra-frame predictive directions and inter-frame predictions. In the JM scheme, if all predictive directions, that is, four directions for Intra16MB and nine directions for Intra4×4MB, are searched, coding of one MB (having sixteen 4×4 blocks) requires 208 (= 16*(4+9)) transform operations merely in searching intra-frame prediction.

While there have been proposed methods for reducing the number of operations in Hadamard transform required in search in intra-frame prediction, including a method in which SAD is used instead of SATD, a method in which the number of predictive directions to be searched is reduced, and a method in which only low-band coefficients are always used for SATD (see Japanese Patent Application Laid Open No. 2000-78589, for example), these methods provide poor precision in intra-frame predictive direction estimation, leaving concern about image quality degeneration.

The present invention has been made in view of these and other problems to be solved, and its object is to provide an image coding technology for reducing the number of transform operations required in SATD calculation in intra-frame predictive direction estimation using a method involving no image quality degeneration.

**MEANS TO SOLVE THE PROBLEMS**

A first embodiment for solving the aforementioned problem is:

an image encoding apparatus for dividing an image frame into a plurality of pixel blocks each having N×M pixels comprising N horizontal pixels and M vertical pixels, and performing intra-frame prediction in a spatial domain on each of said divided pixel blocks using adjacent pixels reconstructed in the past, said apparatus characterized in comprising:

transforming means for transforming an input pixel block having N×M pixels into N×M transform coefficients; locally transforming means for locally transforming an intra-frame predicted pixel block having N×M pixels based on the property of intra-frame prediction; and
detecting means for detecting the best intra-frame predictive direction by comparing the transform coefficients of said input pixel block with the transform coefficients of an intra-frame predicted pixel block in each intra-frame predictive direction.

A second embodiment for solving the aforementioned problem is the first embodiment, characterized in that:

when said property of intra-frame prediction is a direction of intra-frame prediction, said locally transforming means locally transforms:

an intra-frame predicted pixel block having N×M pixels into N horizontal component transform coefficients if said direction of intra-frame prediction is vertical;
an intra-frame predicted pixel block having N×M pixels into M vertical component transform coefficients if said direction of intra-frame prediction is horizontal; and
an intra-frame predicted pixel block having N×M pixels into one DC component transform coefficient if said direction of intra-frame prediction is flat.

A third embodiment for solving the aforementioned problem is the first embodiment, characterized in that:

when said property of intra-frame prediction is a pixel value of a predicted pixel in an intra-frame predicted pixel block, said locally transforming means locally transforms:

an intra-frame predicted pixel block having N×M pixels into N horizontal component transform coefficients if said pixel values are identical in a vertical direction;
an intra-frame predicted pixel block having NxM pixels into M vertical component transform coefficients if said pixel values are identical in a horizontal direction; and
an intra-frame predicted pixel block having N×M pixels into one DC component transform coefficient if all said pixel values are identical.

A fourth embodiment for solving the aforementioned problem is:

an image encoding apparatus for dividing an input image frame into a plurality of pixel blocks each having N×M pixels comprising N horizontal pixels and M vertical pixels, and performing intra-frame prediction in a spatial domain on each of said pixel blockshaving N×M pixels using adjacent pixels reconstructed in the past, said apparatus characterized in comprising:

transforming means for transforming said input pixel block having N×M pixels into N×M transform coefficients; first locally transforming means for locally transforming an intra-frame predicted pixel block having N×M pixels with a vertical intra-frame predictive direction into N horizontal component transform coefficients;

second locally transforming means for locally transforming an intra-frame predicted pixel block having NxM pixels with a horizontal intra-frame predictive direction into M vertical component transform coefficients;

third locally transforming means for locally transforming an intra-frame predicted pixel block having NxM pixels with a flat intra-frame predictive direction into one DC component transform coefficient; and

detecting means for detecting the best intra-frame predictive direction by comparing the transform coefficients of said input pixel block with the transform coefficients of an intra-frame predicted pixel block in each intra-frame predictive direction.

A fifth embodiment for solving the aforementioned problem is:

an image encoding apparatus for dividing an input image frame into a plurality of pixel blocks each having N×M pixels comprising N horizontal pixels and M vertical pixels, and performing intra-frame prediction in a spatial domain on each of said pixel blockshaving N×M pixels using adjacent pixels reconstructed in the past, said apparatus characterized in comprising:

transforming means for transforming an input pixel block having N×M pixels into N×M transform coefficients;

first locally transforming means for locally transforming an intra-frame predicted pixel block having N×M pixels whose pixel values of predicted pixels are identical in a vertical direction into N horizontal component transform coefficients;

second locally transforming means for locally transforming an intra-frame predicted pixel block having N×M pixels whose pixel values of predicted pixels are identical in a horizontal direction into M vertical component transform coefficients;

third locally transforming means for locally transforming an intra-frame predicted pixel block having N×M pixels whose pixel values of predicted pixels are all identical into one DC component transform coefficient; and

detecting means for detecting the best intra-frame predictive direction by comparing the transform coefficients of said input pixel block with the transform coefficients of an intra-frame predicted pixel block in each intra-frame predictive direction.

A sixth embodiment for solving the aforementioned problem is any one of the first - fifth embodiments, characterized in that:

said transforming means performs transform using DCT, integer-precision DCT, or Hadamard transform.

A seventh embodiment for solving the aforementioned problem is:

an image encoding method of dividing an image frame into a plurality of pixel blocks each having NxM pixels comprising N horizontal pixels and M vertical pixels, and performing intra-frame prediction in a spatial domain on each of said divided pixel blocks using adjacent pixels reconstructed in the past, said method characterized in comprising:

a transforming step of transforming an input pixel block having NxM pixels into N×M transform coefficients;

a locally transforming step of locally transforming an intra-frame predicted pixel block having N×M pixels based on the property of intra-frame prediction; and

a detecting step of detecting the best intra-frame predictive direction by comparing the transform coefficients of said input pixel block with the transform coefficients of an intra-frame predicted pixel block in each intra-frame predictive direction.

An eighth embodiment for solving the aforementioned problem is the seventh embodiment, characterized in that:

when said property of intra-frame prediction is a direction of intra-frame prediction, said locally transforming step comprises:

locally transforming an intra-frame predicted pixel block having N×M pixels into N horizontal component transform coefficients if said direction of intra-frame prediction is vertical;

locally transforming an intra-frame predicted pixel block having NxM pixels into M vertical component transform coefficients if said direction of intra-frame prediction is horizontal; and

locally transforming an intra-frame predicted pixel block having N×M pixels into one DC component transform coefficient if said direction of intra-frame prediction is flat.

A ninth embodiment for solving the aforementioned problem is the seventh embodiment, characterized in that:

when said property of intra-frame prediction is a pixel value of a predicted pixel in an intra-frame predicted pixel block, said locally transforming step comprises:

locally transforming an intra-frame predicted pixel block having N×M pixels into N horizontal component transform coefficients if said pixel values are identical in a vertical direction;
locally transforming an intra-frame predicted pixel block having N×M pixels into M vertical component transform coefficients if said pixel values are identical in a horizontal direction; and
locally transforming an intra-frame predicted pixel block having N×M pixels into one DC component transform coefficient when all predicted pixels in said intra-frame predicted pixel block are identical.

A tenth embodiment for solving the aforementioned problem is:

an image encoding method of dividing an input image frame into a plurality of pixel blocks each having N×M pixels comprising N horizontal pixels and M vertical pixels, and performing intra-frame prediction in a spatial domain on each of said pixel blocks having N×M pixels using adjacent pixels reconstructed in the past, said method characterized in comprising:

a transforming step of transforming said input pixel block having N×M pixels into N×M transform coefficients;
a first locally transforming step of locally transforming an intra-frame predicted pixel block having N×M pixels with a vertical intra-frame predictive direction into N horizontal component transform coefficients;
a second locally transforming step of locally transforming an intra-frame predicted pixel block having N×M pixels with a horizontal intra-frame predictive direction into M vertical component transform coefficients;
a third locally transforming step of locally transforming an intra-frame predicted pixel block having N×M pixels with a flat intra-frame predictive direction into one DC component transform coefficient; and
a detecting step of detecting the best intra-frame predictive direction by comparing the transform coefficients of said input pixel block with the transform coefficients of an intra-frame predicted pixel block in each intra-frame predictive direction.

An eleventh embodiment for solving the aforementioned problem is:

an image encoding method of dividing an input image frame into a plurality of pixel blocks each having NxM pixels comprising N horizontal pixels and M vertical pixels, and performing intra-frame prediction in a spatial domain on each of said pixel blocks having NxM pixels using adjacent pixels reconstructed in the past, said method characterized in comprising:

a transforming step of transforming an input pixel block having N×M pixels into N×M transform coefficients;
a first locally transforming step of locally transforming an intra-frame predicted pixel block having N×M pixels whose pixel values of predicted pixels are identical in a vertical direction into N horizontal component transform coefficients;
a second locally transforming step of locally transforming an intra-frame predicted pixel block having N×M pixels whose pixel values of predicted pixels are identical in a horizontal direction into M vertical component transform coefficients;
a third locally transforming step of locally transforming an intra-frame predicted pixel block having N×M pixels whose pixel values of predicted pixels are all identical into one DC component transform coefficient; and
a detecting step of detecting the best intra-frame predictive direction by comparing the transform coefficients of said input pixel block with the transform coefficients of an intra-frame predicted pixel block in each intra-frame predictive direction.

A twelfth embodiment for solving the aforementioned problem is any one of the seventh - eleventh embodiments, characterized in that:

said transforming step comprises a step of performing transform using DCT, integer-precision DCT, or Hadamard transform.

A thirteenth embodiment for solving the aforementioned problem is:

a program for an image encoding apparatus for dividing an image frame into a plurality of pixel blocks each having N×M pixels comprising N horizontal pixels and M vertical pixels, and performing intra-frame prediction in a spatial domain on each of said divided pixel blocks using adjacent pixels reconstructed in the past, said program characterized in causing said image encoding apparatus to function as:

transforming means for transforming an input pixel block having N×M pixels into N×M transform coefficients; locally transforming means for locally transforming an intra-frame predicted pixel block having N×M pixels based on the property of intra-frame prediction; and

detecting means for detecting the best intra-frame predictive direction by comparing the transform coefficients of said input pixel block with the transform coefficients of an intra-frame predicted pixel block in each intra-frame predictive direction.

A fourteenth embodiment for solving the aforementioned problem is the thirteenth embodiment, characterized in that:

when said property of intra-frame prediction is a direction of intra-frame prediction, said locally transforming means is caused to function as locally transforming means that locally transforms:

an intra-frame predicted pixel block having N×M pixels into N horizontal component transform coefficients if said direction of intra-frame prediction is vertical;

an intra-frame predicted pixel block having N×M pixels into M vertical component transform coefficients if said direction of intra-frame prediction is horizontal; and

an intra-frame predicted pixel block having NxM pixels into one DC component transform coefficient if said direction of intra-frame prediction is flat.

A fifteenth embodiment for solving the aforementioned problem is the thirteenth embodiment, characterized in that:

when said property of intra-frame prediction is a pixel value of a predicted pixel in an intra-frame predicted pixel block, said locally transforming means is caused to function as locally transforming means that locally transforms:

an intra-frame predicted pixel block having N×M pixels into N horizontal component transform coefficients if said pixel values are identical in a vertical direction;

an intra-frame predicted pixel block having N×M pixels into M vertical component transform coefficients if said pixel values are identical in a horizontal direction; and

an intra-frame predicted pixel block having N×M pixels into one DC component transform coefficient when all predicted pixels in said intra-frame predicted pixel block are identical.

A sixteenth embodiment for solving the aforementioned problem is:

a program for an image encoding apparatus for dividing an input image frame into a plurality of pixel blocks each having N×M pixels comprised of N horizontal pixels and M vertical pixels, and performing intra-frame prediction in a spatial domain on each said pixel block having NxM pixels using adjacent pixels reconstructed in the past, said program characterized in causing said image encoding apparatus to function as:

transforming means for transforming said input pixel block having N×M pixels into NxM transform coefficients; first locally transforming means for locally transforming an intra-frame predicted pixel block having N×M pixels with a vertical intra-frame predictive direction into N horizontal component transform coefficients;

second locally transforming means for locally transforming an intra-frame predicted pixel block having N×M pixels with a horizontal intra-frame predictive direction into M vertical component transform coefficients;

third locally transforming means for locally transforming an intra-frame predicted pixel block having N×M pixels with a flat intra-frame predictive direction into one DC component transform coefficient; and

detecting means for detecting the best intra-frame predictive direction by comparing the transform coefficients of said input pixel block with the transform coefficients of an intra-frame predicted pixel block in each intra-frame predictive direction.

A seventeenth embodiment for solving the aforementioned problem is:

a program for an image encoding apparatus for dividing an input image frame into a plurality of pixel blocks each having N×M pixels comprising N horizontal pixels and M vertical pixels, and performing intra-frame prediction in a spatial domain on each of said pixel blocks having N×M pixels using adjacent pixels reconstructed in the past, said program characterized in causing said image encoding apparatus to function as:

transforming means for transforming an input pixel block having N×M pixels into N×M transform coefficients;
first locally transforming means for locally transforming an intra-frame predicted pixel block having N×M pixels whose pixel values of predicted pixels are identical in a vertical direction into N horizontal component transform coefficients;
second locally transforming means for locally transforming an intra-frame predicted pixel block having N×M pixels whose pixel values of predicted pixels are identical in a horizontal direction into M vertical component transform coefficients;
third locally transforming means for locally transforming an intra-frame predicted pixel block having N×M pixels whose pixel values of predicted pixels are all identical into one DC component transform coefficient; and
detecting means for detecting the best intra-frame predictive direction by comparing the transform coefficients of said input pixel block with the transform coefficients of an intra-frame predicted pixel block in each intra-frame predictive direction.

An eighteenth embodiment for solving the aforementioned problem is any one of the thirteenth - seventeenth embodiments, characterized in that:

said transforming means is caused to function as transforming means for performing transform using DCT, integer-precision DCT, or Hadamard transform.

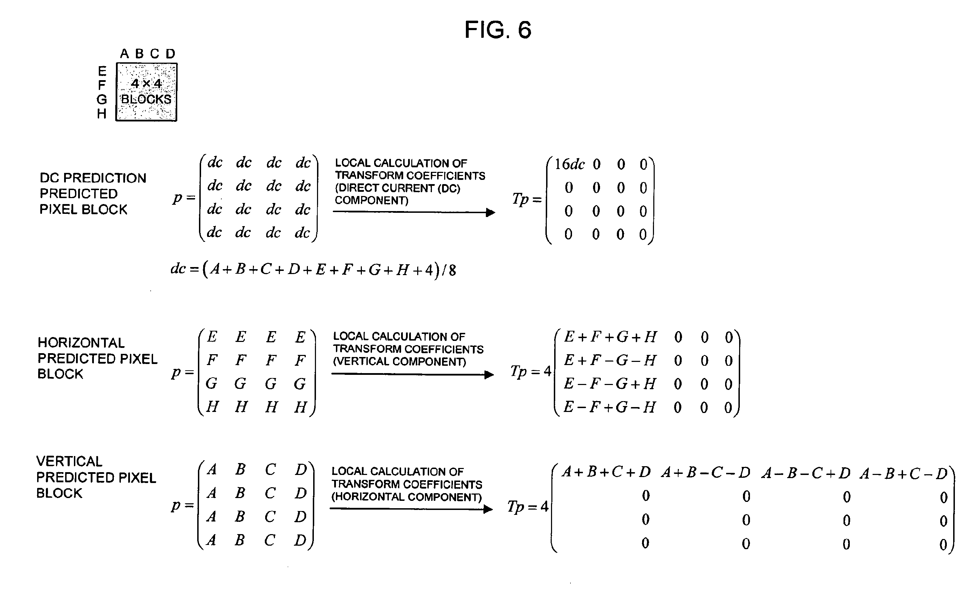

By the "local transform on an intra-frame predicted pixel block" is meant an operation in which only transform coefficients of an effective component (that is, a component possibly having a non-zero value) are calculated among all transform coefficients corresponding to an intra-frame predicted pixel block.
For example, when an intra-frame predicted pixel block having N×M pixels (N and M are whole numbers) is to be locally transformed, if the effective component is a horizontal component, only N horizontal component transform coefficients are calculated and the (N×M-N) remaining transform coefficients are nulled. If the effective component is a vertical component, only M vertical component transform coefficients are calculated and the (N×M-M) remaining transform coefficients are nulled. If the effective component is a DC component, only one DC component transform coefficient is calculated and the (N×M-1) remaining transform coefficients are nulled.
By using orthogonal transform (such as DCT, Hadamard transform, etc.), the local transform (calculation using no matrix operation) provides transform coefficients the same as those obtained by ordinary transform (calculation using a matrix operation).
As a particular example, there is shown in FIG. 6 a case in which a predicted pixel block has a size of 4×4, and transform on a predicted pixel block is Hadamard transform (Equation eq1) without gain correction. T[x] is a symbol representing Hadamard transform on x.
By the aforementioned local transform, the number of Hadamard transform operations (ordinary transform requiring a matrix operation) required in SATD calculation in intra-frame predictive direction estimation can be reduced.

$$Tp = T\big[p\big]$$

$$\begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} p(0,0) & p(0,1) & p(0,2) & p(0,3) \\ p(1,0) & p(1,1) & p(1,2) & p(1,3) \\ p(2,0) & p(2,1) & p(2,2) & p(2,3) \\ p(3,0) & p(3,1) & p(3,2) & p(3,3) \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix} \quad \text{(eq1)}$$

EFFECT OF THE INVENTION

According to the present invention, there are provided means for performing local transform into K transform coefficients, K being less than N×M, among N×M intra-frame predictive transform coefficients corresponding to a predicted pixel block of N×M pixels in intra-frame prediction based on the property of intra-frame prediction, and means for calculating a residual error between an input transform coefficient and a plurality of predictive transform coefficients and detecting the best intra-frame predictive direction using the residual error, thus allowing an image to be encoded with high quality in a reduced amount of calculation.

## BRIEF DESCRIPTION OF THE DRAWINGS

[FIG. 1] FIG. 1 is a diagram showing the configuration of an image frame.
[FIG. 2] FIG. 2 is a block diagram of a conventional technique.
[FIG. 3] FIG. 3 is a diagram for showing energy concentration due to transform.
[FIG. 4] FIG. 4 is a diagram for showing Intra4 predictive directions.
[FIG. 5] FIG. 5 is a diagram for showing Intra16 predictive directions.
[FIG. 6] FIG. 6 is a diagram showing the transform coefficients of an effective component depending upon the gradient of predicted pixels.
[FIG. 7] FIG. 7 is a block diagram of an intra-frame predictive direction estimating section in the conventional technique.
[FIG. 8] FIG. 8 is a block diagram of an intra-frame predictive direction estimating section of a first embodiment in accordance with the present invention.
[FIG. 9] FIG. 9 is a flow chart of intra-frame predictive direction estimation in the present invention.
[FIG. 10] FIG. 10 is a block diagram of an intra-frame predictive direction estimating section of a second embodiment in accordance with the present invention.
[FIG. 11] FIG. 11 is a block diagram of a predictive transform coefficient generating section.
[FIG. 12] FIG. 12 is a block diagram of an intra-frame predictive direction estimating section of a third embodiment in accordance with the present invention.
[FIG. 13] FIG. 13 is a block diagram of an information processing apparatus employing the present invention.
[FIG. 14] FIG. 14 is a diagram showing transform coefficients (DCT) when the effective component is a DC component.
[FIG. 15] FIG. 15 is a diagram showing transform coefficients (DCT) when the effective component is a vertical component.
[FIG. 16] FIG. 16 is a diagram showing transform coefficients (DCT) when the effective component is a horizontal component.

## EXPLANATION OF SYMBOLS

108    Intra-frame predicting section
200    Intra-frame predictive direction estimating section
2001   Controller
2002   Hadamard transforming section
2003   Intra-frame prediction search memory
2004   Predictive direction selecting/intra-MB type selecting section

## BEST MODE FOR CARRYING OUT THE INVENTION

To make a clear distinction between the inventive scheme and conventional scheme (JM scheme), the configuration and operation of intra-frame predictive direction estimation in the conventional scheme will now be described in detail.

An intra-frame predictive direction estimating section 200 is responsible for the function of intra-frame predictive direction estimation.

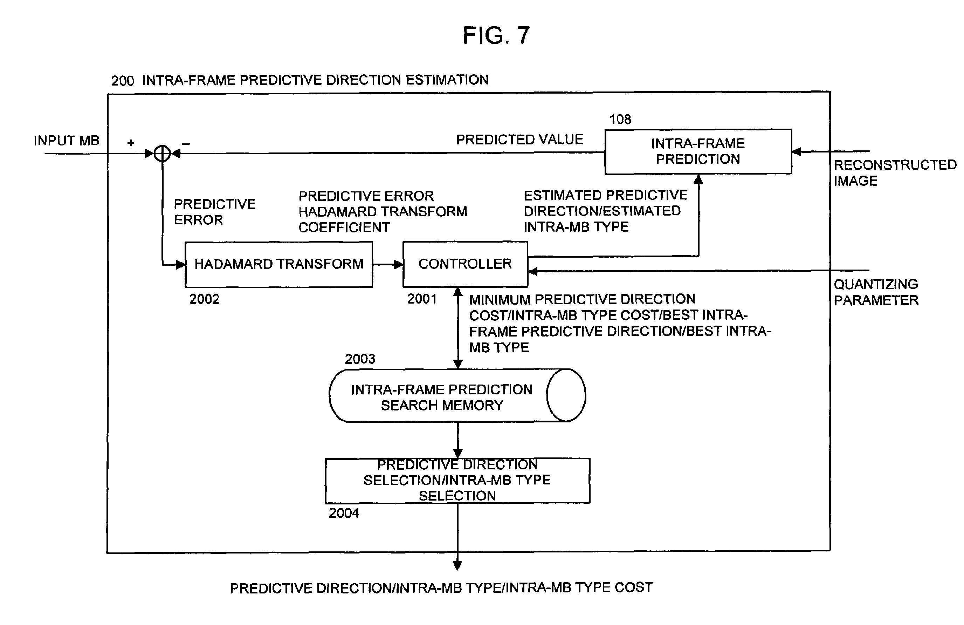

Now the configuration of the intra-frame predictive direction estimating section 200 in the conventional scheme will be described with reference to FIG. 7.

The intra-frame predictive direction estimating section 200 in the conventional scheme is comprised of an intra-frame predicting section 108, a controller 2001, an Hadamard transform section 2002, an intra-frame prediction search memory 2003, a predictive direction selecting/intra-MB type selecting section 2004.

The intra-frame predicting section 108 is input with an estimated predictive direction and an estimated intra-MB type supplied by the controller 2001 and a reconstructed image supplied by the frame memory 105, and outputs an intra-frame predicted value.

The Hadamard transforming section 2002 is input with predictive errors obtained by subtracting predicted values from pixel values in an input MB, applies Hadamard transform to the predictive error signals, and outputs predictive error Hadamard transform coefficients.

The controller 2001 is input with the predictive error Hadamard transform coefficients supplied by the Hadamard transforming section 2002 and a quantizing parameter supplied by the bit rate control 107. Then, it calculates a cost, which will be discussed later, from the input predictive error Hadamard transform coefficients and quantizing parameter, and updates or makes reference to minimum predictive direction cost/intra-MB type cost/best intra-frame predictive direction/best MB type stored in the intra-frame prediction search memory 2003.

The predictive direction selecting/intra-MB type selecting section 2004 makes reference to the minimum predictive direction cost/intra-MB type cost/best intra-frame predictive direction/best MB type stored in the intra-frame prediction search memory 2003, and outputs predictive direction/intra-MB type/intra-MB type cost to the outside.

That is the explanation of the configuration of the intra-frame predictive direction estimating section 200. Before describing the operation of intra-frame predictive direction estimation in detail, several examples of generation of intra-frame predicted values in Intra4MB and Intra16MB (i.e., the output of the intra-frame predicting section 108) in the conventional scheme will be described next.

As an example of Intra4MB intra-frame prediction, formulae for generating 4×4 block predicted values corresponding to vertical/horizontal/DC intra-frame prediction:

$$\text{pred4x4}_{\text{idx}}\left(\text{dir,x,y}\right)\left\{0 \le \text{dir} \le 8, 0 \le \text{x} \le 3, 0 \le \text{y} \le 3\right\}$$

shown in FIG. 4 are given by EQs.(1) - (3).

Vertical prediction in Intra4MB (pred4dir=0):

$$pred4x4_{idx}\left(0, x, y\right) = rec_t\left(mbx + b4x_{idx} + x,\ mby + b4y_{idx} - 1\right) \qquad (1)$$

Horizontal prediction in Intra4MB (pred4dir=1):

$$pred4x4_{idx}\left(1, x, y\right) = rec_t\left(mbx + b4x_{idx} - 1,\ mby + b4y_{idx} + y\right) \qquad (2)$$

DC prediction in Intra4MB (pred4dir=2):

$$pred4x4_{idx}\left(2, x, y\right) = dc \qquad (3)$$

$$dc = \begin{cases} 128 \quad \cdots \ if\left(mbx + b4x_{idx} - 1 < 0 \ and \ mby + b4y_{idx} - 1 < 0\right) \\[2mm] \left(\sum_{x=0}^{3} rec_t\left(mbx + b4x_{idx} + x, \ mby + b4y_{idx} - 1\right)\right. \\[2mm] \left. + \sum_{y=0}^{3} rec_t\left(mbx + b4x_{idx} - 1, \ mby + b4y_{idx} + y\right) + 4\right) >> 3 \\[2mm] \qquad \cdots \ else \ if\left(mbx + b4x_{idx} - 1 \geq 0 \ and \ mby + b4y_{idx} - 1 \geq 0\right) \\[2mm] \left(\sum_{x=0}^{3} rec_t\left(mbx + b4x_{idx} + x, \ mby + b4y_{idx} - 1\right) + 2\right) >> 2 \quad \cdots \ else \ if\left(mby + b4y_{idx} - 1 \geq 0\right) \\[2mm] \left(\sum_{y=0}^{3} rec_t\left(mbx + b4x_{idx} - 1, \ mby + b4y_{idx} + y\right) + 2\right) >> 2 \quad \cdots \ else \end{cases}$$

$$(4)$$

wherein resolution of an image frame is represented by width pixels in a horizontal direction and height pixels in a vertical direction, a time of a current frame to be encoded is represented by t, a pixel value of a reconstructed image frame (reference frame) is represented by $rec_t(i,j)$ $\{0 \leq i \leq width\text{-}1, 0 \leq j \leq height\text{-}1\}$, coordinates of a top-left corner of an MB to be encoded in an image frame are represented by (mbx,mby) $\{0 \leq mbx \leq width\text{-}16, 0 \leq mby \leq height\text{-}16\}$, an index of a $4 \times 4$ block to be encoded in an MB is represented by idx $\{0 \leq idx \leq 15\}$ (see the center figure in FIG. 1), coordinates of a top-left corner of a $4 \times 4$ block of an index idx within an MB is represented by:

$$\left(b4x_{idx}, b4y_{idx}\right)\left\{0 \leq b4x_{idx} \leq 12, 0 \leq b4y_{idx} \leq 12\right\}$$

and coordinates in a $4 \times 4$ block within the $4 \times 4$ block are represented by $(x,y)$ $\{0 \leq x \leq 3, 0 \leq y \leq 3\}$. Symbols "»" and "«" as used herein designate arithmetic right shift and arithmetic left shift, respectively.

The other $4 \times 4$ block intra-frame predictive directions will not be described herein for simplification, and generation formulae for $4 \times 4$ block intra-frame predicted values in the other predictive directions correspond to a technology described in Non-patent Document 1 referred to in the Background section.

Similarly to Intra4MB, as an example of intra-frame prediction in Intra16MB, generation formulae for $16 \times 16$ block predicted values, pred16$\times$16 $(dir, x, y)$ $\{0 \leq dir \leq 3, 0 \leq x \leq 15, 0 \leq y \leq 15\}$, corresponding to vertical/horizontal/DC intra-frame prediction as shown in FIG. 5 are given by EQs.(5) - (7):

Vertical prediction in Intra16MB (pred16dir=0)

$$pred16x16(0,x,y) = rec_t\left(mbx + x, mby - 1\right) \quad (5)$$

Horizontal prediction in Intra16MB (pred16dir=1)

$$pred16x16(1,x,y) = rec_t\left(mbx - 1, mby + y\right) \quad (6)$$

DC prediction in Intra16MB (pred16dir=2)

$$pred16x16(2,x,y) = dc \quad (7)$$

$$dc = \begin{cases} 128 & \cdots \ if\left(mbx-1<0 \ and \ mby-1<0\right) \\ \left(\sum_{x=0}^{15}rec_t\left(mbx+x, \ mby-1\right)+\sum_{y=0}^{15}rec_t\left(mbx-1,mby+y\right)+16\right)>>5 \\ & \cdots \ else \ if\left(mby-1\geq 0 \ and \ mby-1\geq 0\right) \\ \left(\sum_{x=0}^{15}rec_t\left(mbx+x, \ mby-1\right)+8\right)>>4 \ \cdots \ else \ if\left(mby-1\geq 0\right) \\ \left(\sum_{y=0}^{15}rec_t\left(mbx-1, \ mby+y\right)+8\right)>>4 \ \cdots \ else \end{cases} \quad (8)$$

wherein coordinates of a top-left corner of an MB to be encoded are represented by (mbx,mby) {$0 \leq mbx \leq$ *width*-16, $0 \leq mby \leq$ *height*-16}, and coordinates within an MB are represented by (*x,y*) {$0 \leq x \leq 15, 0 \leq y \leq 15$}.

A generation formula for predicted values in a Plane direction (pred16×16(3,x,y)) will not be described herein for simplification, and the generation formula in the intra16MB plane predictive direction corresponds to a technology described in Non-patent Document 1 referred to in the Background section.

For both of the aforementioned Intra4MB and Intra16MB, it can be appreciated that: the gradients of predicted pixels in a predicted pixel block are identical in the vertical direction in vertical intra-frame prediction; the gradients of predicted pixels in a predicted pixel block are identical in the horizontal direction in horizontal intra-frame prediction; and the gradients of predicted pixels in a predicted pixel block are flat in DC intra-frame prediction, that is, all predicted pixel values are identical.

That is the brief explanation of examples of generation of intra-frame predicted values in Intra4MB and Intra16MB in the JM scheme.

Subsequently, the operation of intra-frame predictive direction estimation in the conventional scheme will be described in detail. In intra-frame predictive direction estimation, estimation of the best predictive direction for a 4×4 block, Intra4MB cost calculation, Intra16MB cost calculation, intra-MB type cost calculation, and selection of the best intra-MB type and predictive direction are performed. These processes will be formularily described hereinbelow.

First, estimation of the best predictive direction for a 4×4 block will be described.

For each 4×4 predictive direction dir {$0 \leq dir \leq 8$}, B4Cost (*dir*) given by EQ.(9) is calculated, and a minimum B4Cost is saved as minimum 4×4 block predictive direction cost:

$MinB4Cost_{idx}$

and a corresponding predictive direction dir is saved as best 4×4 block intra-frame predictive direction pred4dir(idx).

$$B4Cost\left(dir\right) = SATD_{idx}\left(dir\right) + \lambda\left(QP\right)\times bitlength\left(dir\right) \quad (9)$$

$$SATD_{idx} = \left(\sum_{x=0}^{3}\sum_{y=0}^{3}\left|Te_{idx}\left(dir,x,y\right)\right|\right)>>1 \quad (10)$$

$$Te_{idx}(dir) =$$

$$\begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} e_{idx}(dir,0,0) & e_{idx}(dir,0,1) & e_{idx}(dir,0,2) & e_{idx}(dir,0,3) \\ e_{idx}(dir,1,0) & e_{idx}(dir,1,1) & e_{idx}(dir,1,2) & e_{idx}(dir,1,3) \\ e_{idx}(dir,2,0) & e_{idx}(dir,2,1) & e_{idx}(dir,2,2) & e_{idx}(dir,2,3) \\ e_{idx}(dir,3,0) & e_{idx}(dir,3,1) & e_{idx}(dir,3,2) & e_{idx}(dir,3,3) \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$

$$(11)$$

$$e_{idx}(dir,x,y) = src(b4x_{idx}+x, b4y_{idx}+y) - pred4x4_{idx}(dir,x,y) \quad (12)$$

$$\lambda(QP) = \sqrt{0.85 \times 2^{QP/3}} \quad (13)$$

wherein src $(i,j)$ $\{0 \leq i \leq 15, 0 \leq j \leq 15\}$ designates a pixel in an input image MB, bitlength(dir) designates a function returning the length of a variable bit rate in the predictive direction dir, QP designates a quantizing parameter for the MB, and EQ. (11) represents Hadamard transform. It should be noted that gain correction is different from that in ordinary Hadamard transform.

Subsequently, Intra4MB cost calculation will be described.

Intra4MB cost Intra4MBCost can be obtained from EQ. (14) :

$$Intra4MBCost = \sum_{idx=0}^{15} MinB4Cost_{idx} + 24 \times \lambda(QP) \quad (14)$$

Subsequently, Intra16MB cost calculation will be described.

In Intra16MB cost calculation, B16Cost $(dir)$ given by EQ.(15) is calculated for each $16 \times 16$ predictive direction dir $\{0 \leq dir \leq 3\}$, and the minimum B16Cost is saved as Intra16MB cost Intra16MBCost, and a corresponding predictive direction is saved as the best $16 \times 16$ block intra-frame predictive direction dir16.

$$B16Cost(dir) = \sum_{idx=0}^{15} SATDAC_{idx}(dir) + SATDDC(dir) + \lambda(QP) \times bitlength(dir)$$

$$(15)$$

$$SATDAC_{idx}(dir) = \left( \sum_{x=0}^{3} \sum_{y=0}^{3} \left| Te_{idx}(dir,x,y) \right| - \left| Te_{idx}(dir,0,0) \right| \right) >> 1 \quad (16)$$

$$SATDDC(dir) = \left( \sum_{x=0}^{3} \sum_{y=0}^{3} \left| TDC(dir,x,y) \right| \right) >> 1 \quad (17)$$

$$TDC(dir) =$$

$$\begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} TeDC(dir,0,0) & TeDC(dir,0,1) & TeDC(dir,0,2) & TeDC(dir,0,3) \\ TeDC(dir,1,0) & TeDC(dir,1,1) & TeDC(dir,1,2) & TeDC(dir,1,3) \\ TeDC(dir,2,0) & TeDC(dir,2,1) & TeDC(dir,2,2) & TeDC(dir,2,3) \\ TeDC(dir,3,0) & TeDC(dir,3,1) & TeDC(dir,3,2) & TeDC(dir,3,3) \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$

$$(18)$$

$$TeDC(dir) =$$

$$\begin{pmatrix} Te_0(dir,0,0) >> 2 & Te_4(dir,0,0) >> 2 & Te_8(dir,0,0) >> 2 & Te_{12}(dir,0,0) >> 2 \\ Te_1(dir,0,0) >> 2 & Te_5(dir,0,0) >> 2 & Te_9(dir,0,0) >> 2 & Te_{13}(dir,0,0) >> 2 \\ Te_2(dir,0,0) >> 2 & Te_6(dir,0,0) >> 2 & Te_{10}(dir,0,0) >> 2 & Te_{14}(dir,0,0) >> 2 \\ Te_3(dir,0,0) >> 2 & Te_7(dir,0,0) >> 2 & Te_{11}(dir,0,0) >> 2 & Te_{15}(dir,0,0) >> 2 \end{pmatrix}$$

$$(19)$$

$$Te_{idx}(dir) =$$

$$\begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} e_{idx}(dir,0,0) & e_{idx}(dir,0,1) & e_{idx}(dir,0,2) & e_{idx}(dir,0,3) \\ e_{idx}(dir,1,0) & e_{idx}(dir,1,1) & e_{idx}(dir,1,2) & e_{idx}(dir,1,3) \\ e_{idx}(dir,2,0) & e_{idx}(dir,2,1) & e_{idx}(dir,2,2) & e_{idx}(dir,2,3) \\ e_{idx}(dir,3,0) & e_{idx}(dir,3,1) & e_{idx}(dir,3,2) & e_{idx}(dir,3,3) \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$

$$(11)$$

$$e_{idx}(dir,x,y) = src(b4x_{idx} + x, b4y_{idx} + y) - pred16x16(dir, b4x_{idx} + x, b4y_{idx} + y)$$

$$(20)$$

Finally, intra-MB cost calculation and selection of the best intra-MB type and best predictive direction will be described.

The best intra-MB type IntraMBType is calculated according to EQ.(21), and an intra-MB type cost IntraMBCost is calculated according to EQ.(22):

$$IntraMBType = \begin{cases} Intra4MB & \cdots & if\,(Intra4MBCost < Intra16MBCost) \\ Intra16MB & \cdots & else \end{cases}$$

$$(21)$$

$$IntraMBCost = \begin{cases} Intra4MBCost & \cdots & if\left(Intra4MBCost < Intra16MBCost\right) \\ Intra16MBCost & \cdots & else \end{cases}$$

$$(22)$$

The predictive direction to be output to the outside is set with the best intra-frame predictive direction obtained in intra-frame predictive direction estimation for each intra-MB type according to the best intra-MB type selected by EQ.(22).

That is the detailed explanation of the operation of intra-frame predictive direction estimation in the conventional scheme.

Since nine $4\times4$ block intra-frame predictive directions are to be estimated for one $4\times4$ block, and four $16\times16$ block intra-frame predictive directions are to be estimated for one $4\times4$ block in the conventional scheme, a total of 208 (=16*(9+4)) Hadamard transform operations are required for one MB. In addition, 212 operations are required including a DC component of an Intra16MB.

The present invention provides a technology for reducing the number of operations in Hadamard transform required in SATD calculation for use in intra-frame predictive direction estimation without degrading image quality.

Now the present invention will be described.

First, a first embodiment of the present invention will be described. The configuration of an image encoding apparatus employing the present invention is different from that of the conventional scheme of FIG. 2 only in the configuration and operation of the intra-frame predictive direction estimating section 200. Therefore, in this embodiment, the configuration and operation of the intra-frame predictive direction estimating section 200 will be described.

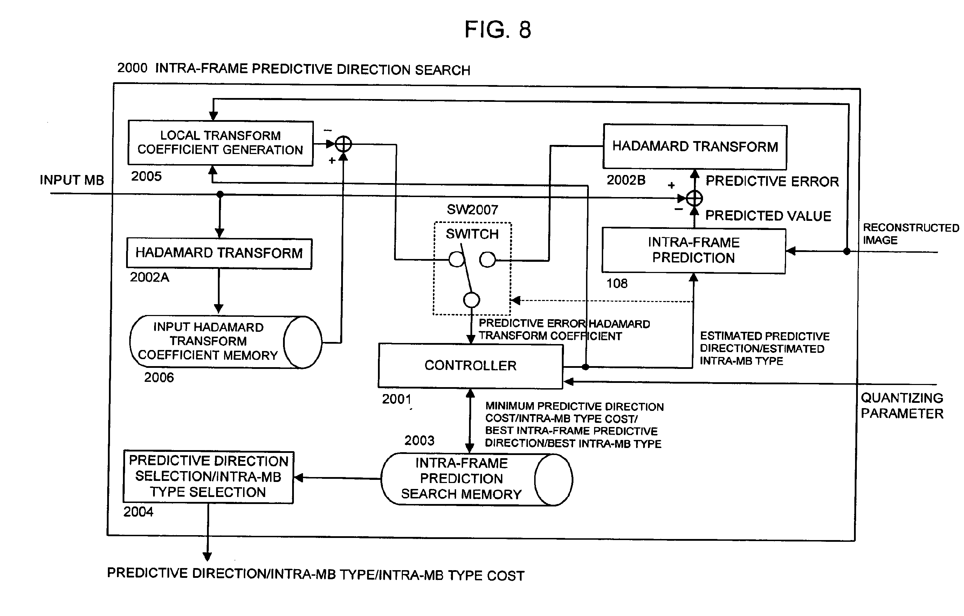

First, the configuration of an intra-frame predictive direction estimating section 200 in the present invention will be described with reference to FIG. 8.

The intra-frame predictive direction estimating section 200 according to the present invention comprises the intra-frame predicting section 108, controller 2001, and Hadamard transforming sections 2002A/2002B, intra-frame prediction search memory 2003, predictive direction selecting/intra-MB type selecting section 2004 as in the conventional scheme, and in addition, a local transform coefficient generating section 2005, an input Hadamard transform coefficient memory 2006, and a switch SW2007.

The intra-frame predicting section 108 is input with an estimated predictive direction and an estimated intra-MB type supplied by the controller 2001 and a reconstructed image supplied by the frame memory 105, and outputs an intra-frame predicted value.

The Hadamard transforming section 2002A is input with pixel values of an input MB, applies Hadamard transform to an image obtained by dividing the input MB into blocks each having $4\times4$ pixels, and supplies Hadamard transform coefficients for the image divided into blocks each having $4\times4$ pixels to the input Hadamard transform coefficient memory 2006.

The Hadamard transforming section 2002B is input with predictive errors obtained by subtracting predicted values supplied by the intra-frame predicting section 108 from pixel values in the input MB, applies Hadamard transform to the input predictive errors, and outputs predictive error Hadamard transform coefficients. It should be noted that while in the present embodiment, the Hadamard transforming sections 2002A and 2002B are separate, a single Hadamard transforming section may be configured by additionally providing a switch having an output switchable according to an input.

The local transform coefficient generating section 2005 decides whether it is possible to perform local transform on predicted values corresponding to the estimated predictive direction/estimated intra-MB type supplied by the controller 2001, and if it is possible to perform local transform, it applies local transform to the predicted values, and outputs the predictive Hadamard transform coefficients.

The input Hadamard transform coefficient memory 2006 stores the input Hadamard transform coefficients supplied by the Hadamard transforming section 2002A, and supplies the stored input Hadamard transform coefficients.

The switch SW2007 monitors the estimated predictive direction and estimated intra-MB supplied by the controller 2001, and supplies to the controller 2001 the predictive error Hadamard transform coefficients supplied by the Hadamard transforming section 2002B or the predictive error Hadamard transform coefficients (values obtained by subtracting predictive Hadamard transform coefficients from the input Hadamard transform coefficients) supplied via the local transform coefficient generating section 2005. In particular, if it is possible to perform local transform on a predictive image corresponding to the estimated predictive direction and estimated intra-MB supplied by the controller 2001 by the local transform coefficient generating section 2005, the switch SW2007 supplies to the controller 2001 the predictive error Hadamard transform coefficients supplied via the local transform coefficient generating section 2005, otherwise, supplies to the controller 2001 the predictive error Hadamard transform coefficients supplied by the Hadamard transforming section 2002B.

The controller 2001 is input with the predictive error Hadamard transform coefficients supplied by the SW2007 and a quantizing parameter supplied by the bit rate control 107, calculates a cost therefrom, and updates or makes reference to minimum predictive direction cost/intra-MB type cost/best intra-frame predictive direction/best MB type stored in the intra-frame prediction search memory 2003.

The predictive direction selecting/intra-MB type selecting section 2004 makes reference to the minimum predictive direction cost/intra-MB type cost/best intra-frame predictive direction/best MB type stored in the intra-frame prediction search memory 2003, and outputs predictive direction/intra-MB type/intra-MB type cost to the outside.

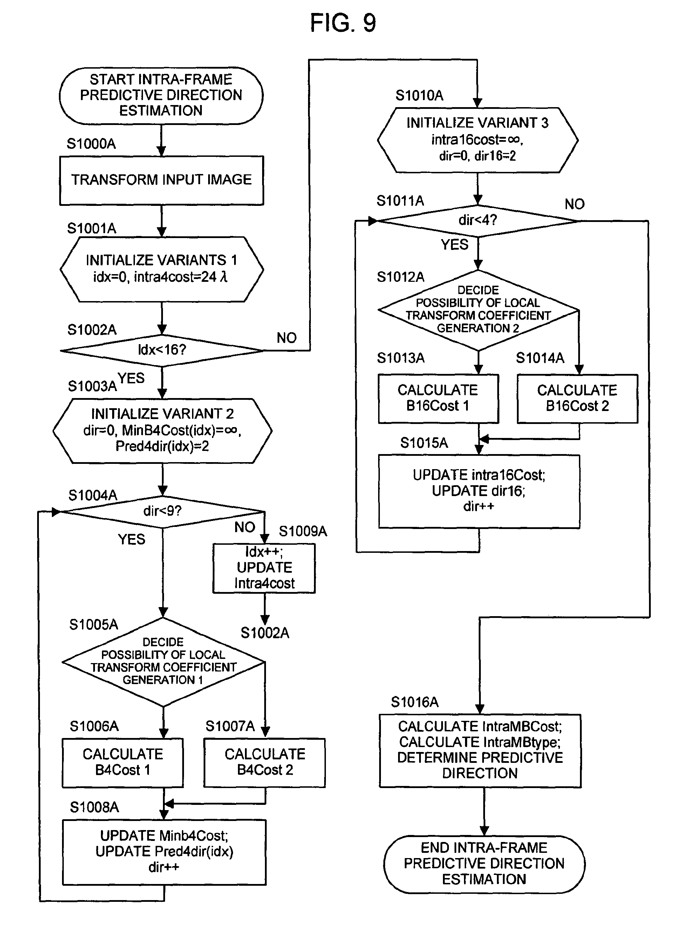

That is the explanation of the configuration of the intra-frame predictive direction estimating section 200 according to the present invention. Subsequently, the operation of the intra-frame predictive direction estimating section 200 in the present invention will be described with reference to a flow chart in FIG. 9.

At Step S1000A, input Hadamard transform coefficients:

$$sT_{idx}(x,y)\{0 \le idx \le 15, 0 \le x \le 3, 0 \le y \le 3\}$$

which are Hadamard transform coefficients of an input image, are calculated according to EQ.(23). Moreover, corresponding to TDC of an Intra16MB according to EQ.(17), DC input Hadamard transform coefficients sTDC $(x,y)$ $\{0 \le x \le 3, 0 \le y \le 3\}$ are calculated from the input Hadamard transform coefficients according to EQ.(24):

$$sT_{idx} = \begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} S_{idx}(0,0) & S_{idx}(0,1) & S_{idx}(0,2) & S_{idx}(0,3) \\ S_{idx}(1,0) & S_{idx}(1,1) & S_{idx}(1,2) & S_{idx}(1,3) \\ S_{idx}(2,0) & S_{idx}(2,1) & S_{idx}(2,2) & S_{idx}(2,3) \\ S_{idx}(3,0) & S_{idx}(3,1) & S_{idx}(3,2) & S_{idx}(3,3) \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$

$$(23)$$

$$sTDC = \begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} sT_0(0,0) \gg 2 & sT_4(0,0) \gg 2 & sT_8(0,0) \gg 2 & sT_{12}(0,0) \gg 2 \\ sT_1(0,0) \gg 2 & sT_5(0,0) \gg 2 & sT_9(0,0) \gg 2 & sT_{13}(0,0) \gg 2 \\ sT_2(0,0) \gg 2 & sT_6(0,0) \gg 2 & sT_{10}(0,0) \gg 2 & sT_{14}(0,0) \gg 2 \\ sT_3(0,0) \gg 2 & sT_7(0,0) \gg 2 & sT_{11}(0,0) \gg 2 & sT_{15}(0,0) \gg 2 \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$

$$(24)$$

$$S_{idx}(x,y) = src(b4x_{idx} + x, b4y_{idx} + y) \qquad (25)$$

At Step S1001A, an index counter idx and an Intra4MB cost Intra4cost for a 4×4 block in an MB are initialized according to EQs.(26) and (27), respectively:

$$idx = 0 \quad (26)$$

$$intra4cost = 24 \times \lambda(QP) \quad (27)$$

At Step S1002A, a decision is made as to whether idx is less than sixteen, and if idx is less than sixteen, the process goes to subsequent processing at Step S1003A; otherwise at Step S1010A.

At Step S1003A, for the purpose of determining a predictive direction for a 4×4 block in an MB that corresponds to the index idx, the estimated direction counter dir (the number of the counter is operated so as to match an actual predictive direction), a 4×4 block best predictive direction pred4dir (idx), and a 4×4 block best predictive direction cost MinB4Cost (idx) are initialized according to EQs.(28) - (30) below:

$$dir=0 \quad (28)$$

$$pred4dir(idx)=2(DC\ direction) \quad (29)$$

$$MinB4Cost(idx) = \infty \quad (30)$$

At Step S1004A, a decision is made as to whether the estimated direction counter dir is less than nine, and if *dir* is less than nine, the process goes to the subsequent processing at Step S1005A; otherwise at Step S1009A.

At Step S1005A, a decision is made as to whether it is possible to perform local transform on a predicted pixel block in a 4×4 block intra-frame predictive direction of the estimated direction counter dir according to EQ.(31):

$$flag1 = \begin{cases} 1 & \cdots \quad if\left(dir = 0\,(\text{vertical})\,or\ dir{=}1\,(\text{horizontal})\,or\ dir{=}2\,(DC)\right) \\ 0 & \cdots \quad else \end{cases}$$
$$(31)$$

If a flag1 is one, the process goes to the subsequent processing at Step S1006A; otherwise, (if flag1 is zero), at Step S1007A.

At Step S1006A, the transform coefficients of a predicted pixel block in a 4×4 block intra-frame predictive direction corresponding to the predictive direction counter dir and index idx are locally transformed using EQs.(32) - (34) according to its predictive direction to generate predictive Hadamard transform coefficients pT($x,y$) {$0 \le x \le 3, 0 \le y \le 3$}. Subsequently, a 4×4 block predictive direction cost B4Cost is calculated according to EQ.(35).

At Step S1006A, the transform coefficients of a predicted pixel block in a 4×4 block intra-frame predictive direction corresponding to the predictive direction counter dir and index idx are locally transformed using EQs.(32) - (34) according to its predictive direction, without relying upon Hadamard transform, to generate locally predictive Hadamard transform coefficients pT($x,y$) {$0 \le x \le 3, 0 \le y \le 3$}. Subsequently, a 4×4 block predictive direction cost B4Cost is calculated according to EQ.(35).

<u>*dir* = 0 (vertical)</u>

$$pT(x,y) = \begin{cases} 4 \times \left( pred4x4_{idx}(0,0,0) + pred4x4_{idx}(0,1,0) \\ + pred4x4_{idx}(0,2,0) + pred4x4_{idx}(0,3,0) \right) & \cdots \quad if \ (x = 0 \ and \ y = 0) \\ 4 \times \left( pred4x4_{idx}(0,0,0) + pred4x4_{idx}(0,1,0) \\ - pred4x4_{idx}(0,2,0) - pred4x4_{idx}(0,3,0) \right) & \cdots \quad else \ if \ (x = 1 \ and \ y = 0) \\ 4 \times \left( pred4x4_{idx}(0,0,0) - pred4x4_{idx}(0,1,0) \\ - pred4x4_{idx}(0,2,0) + pred4x4_{idx}(0,3,0) \right) & \cdots \quad else \ if \ (x = 2 \ and \ y = 0) \\ 4 \times \left( pred4x4_{idx}(0,0,0) - pred4x4_{idx}(0,1,0) \\ + pred4x4_{idx}(0,2,0) - pred4x4_{idx}(0,3,0) \right) & \cdots \quad else \ if \ (x = 3 \ and \ y = 0) \\ 0 & \cdots \quad else \end{cases}$$

(32)

_dir=1_ (horizontal)

$$pT(x,y) = \begin{cases} 4 \times \left( pred4x4_{idx}(1,0,0) + pred4x4_{idx}(1,0,1) \\ + pred4x4_{idx}(1,0,2) + pred4x4_{idx}(1,0,3) \right) & \cdots \quad if \ (x = 0 \ and \ y = 0) \\ 4 \times \left( pred4x4_{idx}(1,0,0) + pred4x4_{idx}(1,0,1) \\ - pred4x4_{idx}(1,0,2) - pred4x4_{idx}(1,0,3) \right) & \cdots \quad else \ if \ (x = 0 \ and \ y = 1) \\ 4 \times \left( pred4x4_{idx}(1,0,0) - pred4x4_{idx}(1,0,1) \\ - pred4x4_{idx}(1,0,2) + pred4x4_{idx}(1,0,3) \right) & \cdots \quad else \ if \ (x = 0 \ and \ y = 2) \\ 4 \times \left( pred4x4_{idx}(1,0,0) - pred4x4_{idx}(1,0,1) \\ + pred4x4_{idx}(1,0,2) - pred4x4_{idx}(1,0,3) \right) & \cdots \quad else \ if \ (x = 0 \ and \ y = 3) \\ 0 & \cdots \quad else \end{cases}$$

(33)

_diz=2_ (DC)

$$pT(x,y) = \begin{cases} 16 \times pred4x4_{idx}(2,0,0) & \cdots \quad if \ (x = 0 \ and \ y = 0) \\ 0 & \cdots \quad else \end{cases}$$

(34)

Calculation of B4Cost

$$B4Cost = \left( \left( \sum_{y=3}^{3} \sum_{x=0}^{3} \left| sT_{idx}(x,y) - pT(x,y) \right| \right) >> 1 \right) + \lambda(QP) \times bitlength(dir)$$

$$(35)$$

It can be seen from EQ.(32) - (34) that the transform coefficients for a predicted pixel block can be obtained without relying upon Hadamard transform. Moreover, the value of the first term in EQ.(35) corresponds to a value of SATD in EQ.(10).

At Step S1007A, a 4×4 block predictive direction cost B4Cost is calculated according to EQ.(9), as in the conventional scheme.

At Step S1008A, depending upon the value of the 4×4 block predictive direction cost B4Cost obtained at Step S1006 or S1007A, the 4×4 block best predictive direction pred4dir(idx) and 4×4 block best predictive direction cost MinB4Cost (*idx*) are updated using EQs.(36) and (37). Subsequently, dir is incremented by one and the process goes to Step S1004A.

$$pred4dir(idx) = \begin{cases} dir & \cdots & if\left(B4Cost < MinB4Cost(idx)\right) \\ pred4dir(idx) & \cdots & else \end{cases} \quad (36)$$

$$MinB4Cost(idx) = \begin{cases} B4Cost & \cdots & if\left(B4Cost < MinB4Cost(idx)\right) \\ MinB4Cost(idx) & \cdots & else \end{cases} \quad (37)$$

At Step S1009A, idx is incremented by one, and moreover, Intra4Cost is updated according to EQ.(38); then, the process goes to Step S1002A.

$$intra4Cost = intra4Cost + MinB4Cost(idx) \qquad (38)$$

At Step S1010A, to determine a 16×16 block best intra-frame predictive direction dir16, the Intra16MB cost Intra16Cost, 16×16 block best intra-frame predictive direction dir16, and estimated predictive direction counter dir are initialized using EQs.(39) - (41) below:

$$intra16Cost = \infty \qquad (39)$$

$$dir16 = 2\left(DC\ direction\right) \qquad (40)$$

$$dir = 0 \qquad (41)$$

At Step S1011A, a decision is made as to whether the estimated direction counter dir is less than four, and if *dir* is less than four, the process goes to the subsequent processing at Step S1012A; otherwise, at Step S1016A.

At Step S1012A, a decision is made as to whether it is possible to perform local transform on a predicted pixel block in 16×16 block intra-frame prediction of the estimated direction counter dir according to EQ.(42):

$$flag2 = \begin{cases} 1 & \cdots & \textit{if}\left(dir = 0\left(\text{vertical}\right)or\ dir = 1\left(\text{horizontal}\right)or\ dir = 2\left(DC\right)\right) \\ 0 & \cdots & \textit{else} \end{cases}$$

$$(42)$$

If flag2 is one, the process goes to the subsequent processing at Step S1013A; otherwise (if flag2 is zero), the process goes to the subsequent processing at Step S1014A.

At Step S1013A, the transform coefficients of a predicted pixel block in a 16×16 block intra-frame predictive direction corresponding to the predictive direction counter dir are processed using EQs.(43) - (48) according to its predictive direction, without relying upon Hadamard transform, to generate predictive Hadamard transform coefficients of each 4×4 block within an MB:

$$pT_{idx}\left(x,y\right)\left\{0 \le \text{idx} \le 15, 0 \le x \le 3, 0 \le y \le 3\right\}$$

and DC predictive Hadamard transform coefficients pTDC($x,y$) {$0 \le x \le 3, 0 \le y \le 3$} corresponding to EQ.(24). Subsequently, a 16×16 block predictive direction cost B16Cost is calculated according to EQ.(50).

*dir*=0 (vertical)

$$pT_{idx}\left(x,y\right) = \begin{cases} 4 \times \left(p_{idx}\left(0,0,0\right) + p_{idx}\left(0,1,0\right) + p_{idx}\left(0,2,0\right) + p_{idx}\left(0,3,0\right)\right) \\ \quad \cdots \quad \textit{if}\left(x = 0\ \textit{and}\ y = 0\right) \\ 4 \times \left(p_{idx}\left(0,0,0\right) + p_{idx}\left(0,1,0\right) - p_{idx}\left(0,2,0\right) - p_{idx}\left(0,3,0\right)\right) \\ \quad \cdots \quad \textit{else if}\left(x = 1\ \textit{and}\ y = 0\right) \\ 4 \times \left(p_{idx}\left(0,0,0\right) - p_{idx}\left(0,1,0\right) - p_{idx}\left(0,2,0\right) + p_{idx}\left(0,3,0\right)\right) \\ \quad \cdots \quad \textit{else if}\left(x = 2\ \textit{and}\ y = 0\right) \\ 4 \times \left(p_{idx}\left(0,0,0\right) - p_{idx}\left(0,1,0\right) + p_{idx}\left(0,2,0\right) - p_{idx}\left(0,3,0\right)\right) \\ \quad \cdots \quad \textit{else if}\left(x = 3\ \textit{and}\ y = 0\right) \\ 0 \quad \cdots \quad \textit{else} \end{cases}$$

$$(43)$$

$$pTDC(x,y) = \begin{cases} pT_0(0,0) + pT_1(0,0) + pT_2(0,0) + pT_3(0,0) \\ \quad \cdots \quad if\ (x=0\ and\ y=0) \\ pT_0(0,0) + pT_1(0,0) - pT_2(0,0) - pT_3(0,0) \\ \quad \cdots \quad else\ if\ (x=1\ and\ y=0) \\ pT_0(0,0) - pT_1(0,0) - pT_2(0,0) + pT_3(0,0) \\ \quad \cdots \quad else\ if\ (x=2\ and\ y=0) \\ pT_0(0,0) - pT_1(0,0) + pT_2(0,0) - pT_3(0,0) \\ \quad \cdots \quad else\ if\ (x=3\ and\ y=0) \\ 0 \quad \cdots \quad else \end{cases} \quad (44)$$

<u>dir=1 (horizontal)</u>

$$pT_{idx}(x,y) = \begin{cases} 4 \times \left( p_{idx}(1,0,0) + p_{idx}(1,0,1) + p_{idx}(1,0,2) + p_{idx}(1,0,3) \right) \\ \quad \cdots \quad if\ (x=0\ and\ y=0) \\ 4 \times \left( p_{idx}(1,0,0) + p_{idx}(1,0,1) - p_{idx}(1,0,2) - p_{idx}(1,0,3) \right) \\ \quad \cdots \quad else\ if\ (x=0\ and\ y=1) \\ 4 \times \left( p_{idx}(1,0,0) - p_{idx}(1,0,1) - p_{idx}(1,0,2) + p_{idx}(1,0,3) \right) \\ \quad \cdots \quad else\ if\ (x=0\ and\ y=2) \\ 4 \times \left( p_{idx}(1,0,0) - p_{idx}(1,0,1) + p_{idx}(1,0,2) - p_{idx}(1,0,3) \right) \\ \quad \cdots \quad else\ if\ (x=0\ and\ y=3) \\ 0 \quad \cdots \quad else \end{cases}$$

$$(45)$$

$$pTDC(x,y) = \begin{cases} pT_0(0,0) + pT_4(0,0) + pT_8(0,0) + pT_{12}(0,0) \\ \quad \cdots \quad if\,(x = 0 \; and \; y = 0) \\ pT_0(0,0) + pT_4(0,0) - pT_8(0,0) - pT_{12}(0,0) \\ \quad \cdots \quad else \; if\,(x = 0 \; and \; y = 1) \\ pT_0(0,0) - pT_4(0,0) - pT_8(0,0) + pT_{12}(0,0) \\ \quad \cdots \quad else \; if\,(x = 0 \; and \; y = 2) \\ pT_0(0,0) - pT_4(0,0) + pT_8(0,0) - pT_{12}(0,0) \\ \quad \cdots \quad else \; if\,(x = 0 \; and \; y = 3) \\ 0 \quad \cdots \quad else \end{cases}$$

(46)

_dir=2 (DC)_

$$pT_{idx}(x,y) = \begin{cases} 16 \times p_{idx}(2,0,0) & \cdots \quad if\,(x = 0 \; and \; y = 0) \\ 0 & \cdots \quad else \end{cases} \qquad (47)$$

$$pTDC(x,y) = \begin{cases} 64 \times p_{idx}(2,0,0) & \cdots \quad if\,(x = 0 \; and \; y = 0) \\ 0 & \cdots \quad else \end{cases} \qquad (48)$$

$$p_{idx}(dir,x,y) = pred16x16(dir, b4x_{idx} + x, b4y_{idx} + y) \qquad (49)$$

$$B16Cost = \sum_{idx=0}^{15} DAC_{idx} + DDC + \lambda(QP) \times bitlength(dir) \qquad (50)$$

$$DAC_{idx}(dir) = \left( \sum_{x=0}^{3}\sum_{y=0}^{3} \left| sT_{idx}(x,y) - pT_{idx}(x,y) \right| - \left| sT_{idx}(0,0) - pT_{idx}(0,0) \right| \right) \gg 1$$

(51)

$$DDC = \left( \sum_{x=0}^{3} \sum_{y=0}^{3} \left| sTDC(x,y) - pTDC(x,y) \right| \right) >> 1 \quad (52)$$

It can be seen from EQ.(43) - (48) that a predicted pixel block can be locally transformed without relying upon Hadamard transform. Moreover, EQ.(51) corresponds to SATDAC of EQ.(16), and EQ.(52) corresponds to SATDC of EQ. (17).

At Step S1014A, a 16×16 block predictive direction cost B16Cost is calculated according to EQ.(15) as in the conventional scheme.

At Step S1015A, with the value for the 16×16 block predictive direction cost B16Cost obtained at Step S1013A or S1014A, the 16×16 block best predictive direction dir16 and Intra16MB cost Intra16Cost are updated using EQ.(53) and (54). Moreover, dir is incremented by one, and the process goes to Step S1011A.

$$dir16 = \begin{cases} dir & \cdots & if\left(B16Cost < \text{intra16Cost}\right) \\ dir16 & \cdots & else \end{cases} \quad (53)$$

$$\text{intra16Cost} = \begin{cases} B16Cost & \cdots & if\left(B16Cost < \text{intra16Cost}\right) \\ \text{intra16Cost} & \cdots & else \end{cases} \quad (54)$$

At Step S1016A, the best intra-MB type IntraMBType is calculated according to EQ.(21), and the intra-MB type cost IntraMBCost is calculated according to EQ.(22), as in the conventional scheme. The predictive direction to be output to the outside is set with the best intra-frame predictive direction obtained in intra-frame predictive direction estimation for each intra-MB type according to the best intra-MB type selected by EQ.(21) (if the best intra-MB type is Intra16MB, dir16 is set; otherwise, pred4dir(idx) {$0 \le idx \le 15$} is set) .

$$IntraMBType = \begin{cases} Intra4MB & \cdots & if\left(Intra4MBCost < Intra16MBCost\right) \\ Intra16MB & \cdots & else \end{cases}$$
$$(21)$$

$$IntraMBCost = \begin{cases} Intra4MBCost & \cdots & if\left(Intra4MBCost < Intra16MBCost\right) \\ Intra16MBCost & \cdots & else \end{cases}$$
$$(22)$$

That is the explanation of the operation of the intra-frame predictive direction estimating section 200 in the present invention.

According to the present invention, SATD can be calculated in predictive direction estimation in vertical/horizontal/DC intra-frame prediction, without relying upon Hadamard transform (ordinary Hadamard transform requiring a matrix operation).

As a result, the total number of operations in Hadamard transform involved in SATD calculation in intra-frame predictive estimation is only a total of 128 (16*(6+1+1)) for one MB, that is, the number of 4×4 block intra-frame predictive directions requiring Hadamard transform is 6 (=9-3), plus the number of 16×16 block intra-frame predictive directions requiring Hadamard transform is 1 (=4-3), plus one operation of Hadamard transform on an input signal. It should be noted that the total number of operations is 130 if the Intra16MB DC component is included.

Comparing 128 operations according to the present invention with 208 operations in the conventional scheme, about 38% of the number of operations is reduced. The present invention can encode an image with an amount of calculation that is less than that in the conventional scheme without degrading image quality.

That is the description of the first embodiment.

Next, a second embodiment in accordance with the present invention will be described. While in vertical/ horizontal/DC intra-frame predictive direction estimation in in the first embodiment, an input pixel block and a predicted pixel block are separately subjected to Hadamard transform to calculate SATD from their difference (which will be called transformational domain differential scheme hereinbelow); and in estimation in other intra-frame predictive directions, a difference between a pixel value in an input pixel block and that in a predicted pixel block is subjected to Hadamard transform to calculate SATD (which will be called spatial domain differential scheme hereinbelow). That is, in the first embodiment, the spatial domain differential scheme and the transformational domain differential scheme are adaptively employed.

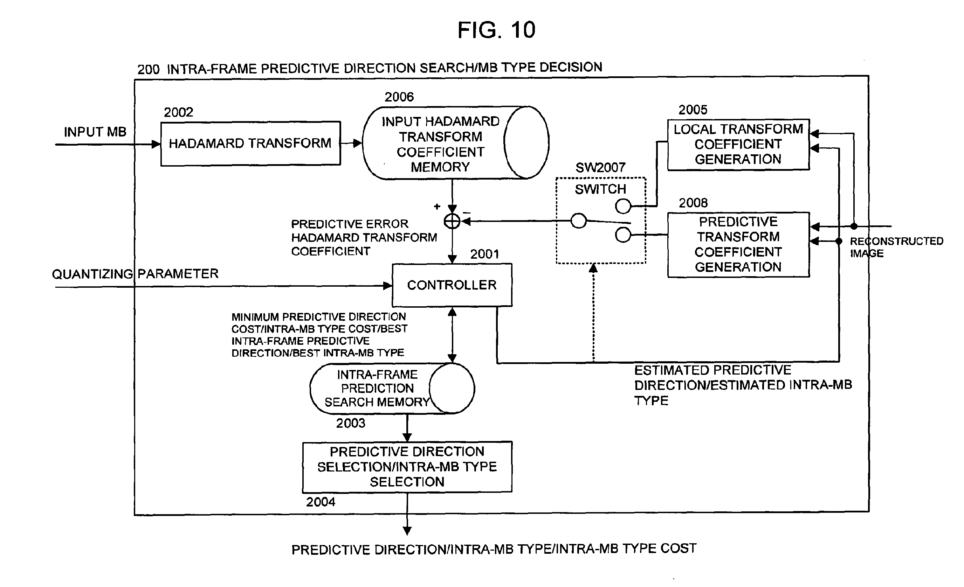

The configuration of the second embodiment of the present invention is shown in FIG. 10, in which, to further simplify the configuration of the apparatus, the transformational domain differential scheme is always used to attain the function equivalent to that in the first embodiment.

An intra-frame predictive direction estimating section 200 in accordance with the second embodiment of the present invention comprises the controller 2001, Hadamard transforming section 2002, intra-frame prediction search memory 2003, and predictive direction selecting/intra-MB type selecting section 2004 as in the conventional scheme, and in addition, a local transform coefficient generating section 2005, an input Hadamard transform coefficient memory 2006, a switch SW2007, and a predictive transform coefficient generating section 2008.

The Hadamard transforming section 2002 is input with pixel values of an input MB, applies Hadamard transform to an image obtained by dividing the input MB into blocks each having 4×4 pixels, and supplies Hadamard transform coefficients of the image obtained by dividing the input MB into blocks each having 4×4 pixels to the input Hadamard transform coefficient memory 2006.

The local transform coefficient generating section 2005 decides whether it is possible to perform local transform on predicted values corresponding to an estimated predictive direction/estimated intra-MB type supplied by the controller 2001, and if it is possible to perform local transform, it applies local transform to the predicted values, and supplies the result of the calculation as predictive Hadamard transform coefficients to SW2007.

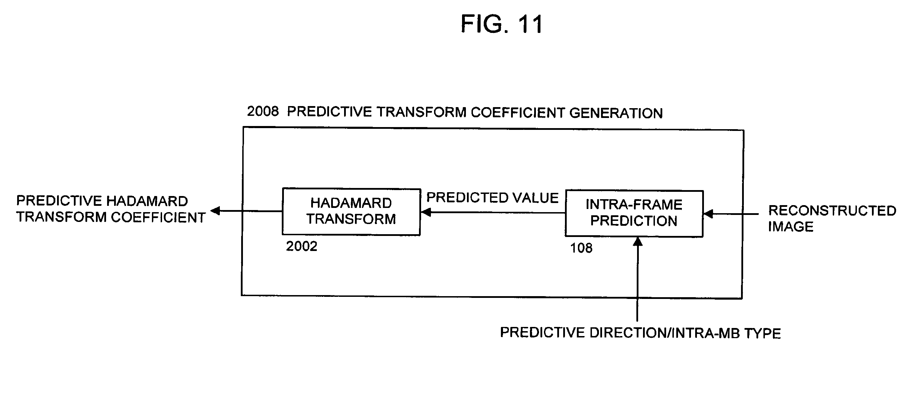

As shown in FIG. 11, the internal configuration of the predictive transform coefficient generating section 2008 comprises the intra-frame predicting section 108 and Hadamard transforming section 2002. The intra-frame predicting section 108 is input with the supplied predictive direction, intra-MB type and reconstructed image, and outputs intra-frame predicted values. The intra-frame predicted values are subjected to Hadamard transform by the Hadamard transforming section 2002, and the transformed intra-frame predicted values are supplied to SW2007 as predictive Hadamard transform coefficients.

The Hadamard transforming section 2002 is input with pixel values of an input MB, applies Hadamard transform to an image obtained by dividing the input MB into blocks each having 4×4 pixels, and supplies Hadamard transform coefficients of the image obtained by dividing the input MB into blocks each having 4×4 pixels to the input Hadamard transform coefficient memory 2006.

The input Hadamard transform coefficient memory 2006 stores the input Hadamard transform coefficients supplied by the Hadamard transforming section 2002A, and supplies the stored input Hadamard transform coefficients.

SW2007 monitors an estimated predictive direction and an estimated intra-MB supplied by the controller 2001, and if it is possible to perform local transform on predicted values corresponding to the estimated predictive direction and estimated intra-MB by the local transform coefficient generating section 2005, SW2007 connects the predictive Hadamard transform coefficients supplied by the local transform coefficient generating section 2005 to supply differences from the input Hadamard transform coefficients to the controller 2001. If it is not possible to perform local transform by the local transform coefficient generating section 2005, SW2007 connects the predictive Hadamard transform coefficients supplied by the predictive transform coefficient generating section 2008 to supply differences from the input Hadamard transform coefficients to the controller 2001.

The controller 2001 is input with the supplied predictive error Hadamard transform coefficients (differences between the predictive Hadamard transform coefficients and input Hadamard transform coefficients) and a quantizing parameter supplied by the bit rate control 107, calculates a cost therefrom, and updates or makes reference to minimum predictive direction cost/intra-MB type cost/best intra-frame predictive direction/best MB type stored in the intra-frame prediction search memory 2003.

The predictive direction selecting/intra-MB type selecting section 2004 makes reference to the minimum predictive direction cost/intra-MB type cost/best intra-frame predictive direction/best MB type stored in the intra-frame prediction search memory 2003, and outputs predictive direction/intra-MB type/intra-MB type cost to the outside.

That is the explanation of the configuration of the intra-frame predictive direction estimating section 200 in the second embodiment. Subsequently, the operation of the intra-frame predictive direction estimating section 200 in the second embodiment of the present invention will be described.

The operation in the second embodiment of the present invention requires modification at Steps S1007A and S1014A in the flow chart of FIG. 9 illustrated in the first embodiment. Therefore, in the operation in the second embodiment of the present invention, Steps S1007A/S1014A of FIG. 9 are substituted with Steps S1007B/S1014B, which will now be described. Therefore, description will be made only on Steps S1007B/S1014B.

At Step S1007B, predictive Hadamard transform coefficients pT(x,y) {$0 \le x \le 3$, $0 \le y \le 3$} in a 4×4 block intra-frame predictive direction corresponding to the predictive direction counter dir and an index idx are generated according to EQ.(55). Subsequently, a 4×4 block predictive direction cost B4Cost is calculated according to EQ.(35).

$$pT(x,y) =$$
$$\begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} p4_{idx}(dir,0,0) & p4_{idx}(dir,0,1) & p4_{idx}(dir,0,2) & p4_{idx}(dir,0,3) \\ p4_{idx}(dir,1,0) & p4_{idx}(dir,1,1) & p4_{idx}(dir,1,2) & p4_{idx}(dir,1,3) \\ p4_{idx}(dir,2,0) & p4_{idx}(dir,2,1) & p4_{idx}(dir,2,2) & p4_{idx}(dir,2,3) \\ p4_{idx}(dir,3,0) & p4_{idx}(dir,3,1) & p4_{idx}(dir,3,2) & p4_{idx}(dir,3,3) \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$
$$(55)$$

wherein

$$p4_{idx}(dir,x,y) = pred4x4_{idx}(dir,x,y)$$

At Step S1014B, the predictive Hadamard transform coefficients in a 16×16 block intra-frame predictive direction corresponding to the predictive direction counter dir:

$$pT_{idx}(x,y)\{0 \le \mathrm{idx} \le 15, 0 \le \mathrm{x} \le 3, 0 \le \mathrm{y} \le 3\}$$

and DC Hadamard transform coefficients pTDC(x,y) {$0 \le x \le 3$, $0 \le y \le 3$} are generated according to EQs.(56) and (57), respectively. Subsequently, a 16×16 block predictive direction cost B16Cost is calculated according to EQ.(50).

$$pT_{idx}(x,y) =$$
$$\begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} p_{idx}(dir,0,0) & p_{idx}(dir,0,1) & p_{idx}(dir,0,2) & p_{idx}(dir,0,3) \\ p_{idx}(dir,1,0) & p_{idx}(dir,1,1) & p_{idx}(dir,1,2) & p_{idx}(dir,1,3) \\ p_{idx}(dir,2,0) & p_{idx}(dir,2,1) & p_{idx}(dir,2,2) & p_{idx}(dir,2,3) \\ p_{idx}(dir,3,0) & p_{idx}(dir,3,1) & p_{idx}(dir,3,2) & p_{idx}(dir,3,3) \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$
$$(56)$$

$$pTDC =$$

$$\begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} pT_0(0,0) \gg 2 & pT_4(0,0) \gg 2 & pT_8(0,0) \gg 2 & pT_{12}(0,0) \gg 2 \\ pT_1(0,0) \gg 2 & pT_5(0,0) \gg 2 & pT_9(0,0) \gg 2 & pT_{13}(0,0) \gg 2 \\ pT_2(0,0) \gg 2 & pT_6(0,0) \gg 2 & pT_{10}(0,0) \gg 2 & pT_{14}(0,0) \gg 2 \\ pT_3(0,0) \gg 2 & pT_7(0,0) \gg 2 & pT_{11}(0,0) \gg 2 & pT_{15}(0,0) \gg 2 \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix}$$

$$(57)$$

Although right shift in EQ.(57) causes incomplete match between the evaluated value B16Cost(3) in the Plane direction of an Intra16MB and the value of B16Cost(3) in the first embodiment, estimation precision in the intra-frame predictive direction is almost the same.

That is the explanation of the operation in the second embodiment of the present invention.

By using the second embodiment of the present invention, an image can be encoded with an amount of calculation that is less than that in the conventional scheme without degrading image quality, as in the first embodiment.

Next, a third embodiment in accordance with the present invention will be described.

The second embodiment above has a configuration in which one local transform coefficient generating section 2005 and one predictive transform coefficient generating section 2008 are versatilely employed to calculate predictive Hadamard transform coefficients. It is possible, however, to make a configuration comprising a plurality of local transform coefficient generating sections and predictive transform coefficient generating sections dedicated to respective intra-frame predictive directions.

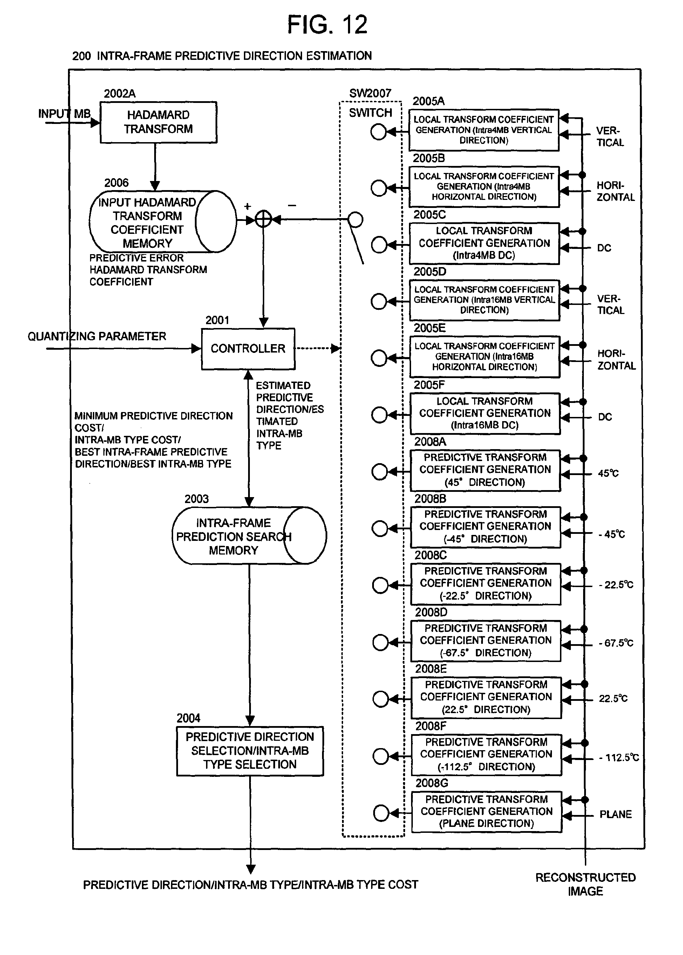

FIG. 12 is a block diagram of an intra-frame predictive direction estimating section 200 representing the third embodiment. FIG. 12 shows a configuration comprising a plurality of local transform coefficient generating sections 2005 and predictive transform coefficient generating sections 2008 dedicated to respective intra-frame predictive directions.

Although the present embodiment provides a larger apparatus than those in the first and second embodiments, generation of intra-frame predicted values and Hadamard transform requiring time-consuming calculation in directions other than those in the vertical direction/horizontal direction/DC, can be together performed in parallel, and therefore, the operation of the intra-frame predictive direction estimating section 200 is sped up.

By using the present embodiment, an image can be encoded with an amount of calculation that is less than that in the conventional scheme without degrading image quality, as in the first and second embodiments.

Next, a fourth embodiment in accordance with the present invention will be described. The embodiments above address a case in which local calculation of intra-frame predictive transform coefficients of an intra-frame predicted pixel block are done based on an intra-frame predictive direction. The present embodiment addresses a case in which pixel values of predicted pixels in an intra-frame predicted pixel block are used instead of the intra-frame predictive direction.

In the present embodiment, when the aforementioned pixel values are identical in a vertical direction, local transform into horizontal component transform coefficients is performed; if the aforementioned pixel values are identical in a horizontal direction, local transform into vertical component transform coefficients is performed; and when all the pixel values are identical, local transform into DC component transform coefficients is performed.

Moreover, the embodiments above address intra-frame predictive direction estimation on brightness signals. However, the present invention may be applied to intra-frame predictive direction estimation on color difference signals using an intra-frame predictive direction in which the gradients of predicted pixels in a predicted pixel block are identical in the vertical direction, or the gradients of predicted pixels in a predicted pixel block are identical in the horizontal direction, or the gradients of predicted pixels in a predicted pixel block are flat.

Furthermore, the embodiments above address a block of a size of $4 \times 4$ pixels for transform used for SATD. However, the present invention is not limited to $4 \times 4$ pixel block and may be applied to a block size of $8 \times 8$ pixels, $16 \times 16$ pixels, and so forth.

Furthermore, while the embodiments above address a case in which transform used for SATD for use in intra-frame predictive direction estimation is Hadamard transform, the present invention is not limited to Hadamard transform and may be applied to transform such as integer-precision DCT as given by EQ.(58):

$$T = \begin{pmatrix} 1 & 1 & 1 & 1 \\ 2 & 1 & -1 & -2 \\ 1 & -1 & -1 & 1 \\ 1 & -2 & 2 & -1 \end{pmatrix} \begin{pmatrix} e(0,0) & e(0,1) & e(0,2) & e(0,3) \\ e(1,0) & e(1,1) & e(1,2) & e(1,3) \\ e(2,0) & e(2,1) & e(2,2) & e(2,3) \\ e(3,0) & e(3,1) & e(3,2) & e(3,3) \end{pmatrix} \begin{pmatrix} 1 & 2 & 1 & 1 \\ 1 & 1 & -1 & -2 \\ 1 & -1 & -1 & 2 \\ 1 & -2 & 1 & -1 \end{pmatrix} \qquad (58)$$

For example, if transform used for SATD calculation, except a DC block, is integer-precision DCT according to EQ.(58), EQs. (10), (11), (16), (23), (32), (33), (35), (43), (45), (51), (55) and (56) in the embodiments above must be modified to EQs.(10B), (11B), (16B), (23B), (32B), (33B), (35B), (43B), (45B), (51B), (55B) and (56B) below:

$$SATD_{idx} = \left( \sum_{x=0}^{3} \sum_{y=0}^{3} \left| g(x,y) \times Te_{idx}(dir,x,y) \right| \right) >> 1 \qquad (10B)$$

$Te_{idx}(dir) =$

$$\begin{pmatrix} 1 & 1 & 1 & 1 \\ 2 & 1 & -1 & -2 \\ 1 & -1 & -1 & 1 \\ 1 & -2 & 2 & -1 \end{pmatrix} \begin{pmatrix} e_{idx}(dir,0,0) & e_{idx}(dir,0,1) & e_{idx}(dir,0,2) & e_{idx}(dir,0,3) \\ e_{idx}(dir,1,0) & e_{idx}(dir,1,1) & e_{idx}(dir,1,2) & e_{idx}(dir,1,3) \\ e_{idx}(dir,2,0) & e_{idx}(dir,2,1) & e_{idx}(dir,2,2) & e_{idx}(dir,2,3) \\ e_{idx}(dir,3,0) & e_{idx}(dir,3,1) & e_{idx}(dir,3,2) & e_{idx}(dir,3,3) \end{pmatrix} \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

(11B)

$SATDAC_{idx}(dir) =$

$$\left( \sum_{x=0}^{3} \sum_{y=0}^{3} \left| g(x,y) \times Te_{idx}(dir,x,y) \right| - \left| g(0,0) \times Te_{idx}(dir,0,0) \right| \right) >> 1 \qquad (16B)$$

$sT_{idx} =$

$$\begin{pmatrix} 1 & 1 & 1 & 1 \\ 2 & 1 & -1 & -2 \\ 1 & -1 & -1 & 1 \\ 1 & -2 & 2 & -1 \end{pmatrix} \begin{pmatrix} S_{idx}(0,0) & S_{idx}(0,1) & S_{idx}(0,2) & S_{idx}(0,3) \\ S_{idx}(1,0) & S_{idx}(1,1) & S_{idx}(1,2) & S_{idx}(1,3) \\ S_{idx}(2,0) & S_{idx}(2,1) & S_{idx}(2,2) & S_{idx}(2,3) \\ S_{idx}(3,0) & S_{idx}(3,1) & S_{idx}(3,2) & S_{idx}(3,3) \end{pmatrix} \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

(23B)

$$pT(x,y) = \begin{cases} 4 \times \big(pred4x4_{idx}(0,0,0) + pred4x4_{idx}(0,1,0) \\ +pred4x4_{idx}(0,2,0) + pred4x4_{idx}(0,3,0)\big) & \cdots \quad if\ (x = 0\ and\ y = 0) \\ 4 \times \big(2 \times pred4x4_{idx}(0,0,0) + pred4x4_{idx}(0,1,0) \\ -pred4x4_{idx}(0,2,0) - 2 \times pred4x4_{idx}(0,3,0)\big) & \cdots \quad else\ if\ (x = 1\ and\ y = 0) \\ 4 \times \big(pred4x4_{idx}(0,0,0) - pred4x4_{idx}(0,1,0) \\ -pred4x4_{idx}(0,2,0) + pred4x4_{idx}(0,3,0)\big) & \cdots \quad else\ if\ (x = 2\ and\ y = 0) \\ 4 \times \big(pred4x4_{idx}(0,0,0) - 2 \times pred4x4_{idx}(0,1,0) \\ +2 \times pred4x4_{idx}(0,2,0) - pred4x4_{idx}(0,3,0)\big) & \cdots \quad else\ if\ (x = 3\ and\ y = 0) \\ 0 & \cdots \quad else \end{cases}$$

$$(32B)$$

$$B4Cost = \left(\left(\sum_{y=3}^{3}\sum_{x=0}^{3} \big| g(x,y) \times (sT_{idx}(x,y) - pT(x,y)) \big|\right) >> 1\right) + \lambda(QP) \times bitlength(dir)$$

$$(35B)$$

$$pT(x,y) = \begin{cases} 4 \times \big(pred4x4_{idx}(1,0,0) + pred4x4_{idx}(1,0,1) \\ +pred4x4_{idx}(1,0,2) + pred4x4_{idx}(1,0,3)\big) & \cdots \quad if\ (x = 0\ and\ y = 0) \\ 4 \times \big(2 \times pred4x4_{idx}(1,0,0) + pred4x4_{idx}(1,0,1) \\ -pred4x4_{idx}(1,0,2) - 2 \times pred4x4_{idx}(1,0,3)\big) & \cdots \quad else\ if\ (x = 0\ and\ y = 1) \\ 4 \times \big(pred4x4_{idx}(1,0,0) - pred4x4_{idx}(1,0,1) \\ -pred4x4_{idx}(1,0,2) + pred4x4_{idx}(1,0,3)\big) & \cdots \quad else\ if\ (x = 0\ and\ y = 2) \\ 4 \times \big(pred4x4_{idx}(1,0,0) - 2 \times pred4x4_{idx}(1,0,1) \\ +2 \times pred4x4_{idx}(1,0,2) - pred4x4_{idx}(1,0,3)\big) & \cdots \quad else\ if\ (x = 0\ and\ y = 3) \\ 0 & \cdots \quad else \end{cases}$$

$$(33B)$$

$$pT_{idx}(x,y) = \begin{cases} 4 \times \left( p_{idx}(0,0,0) + p_{idx}(0,1,0) + p_{idx}(0,2,0) + p_{idx}(0,3,0) \right) \\ \quad \cdots \quad if\,(x = 0 \; and \; y = 0) \\ 4 \times \left( 2 \times p_{idx}(0,0,0) + p_{idx}(0,1,0) - p_{idx}(0,2,0) - 2 \times p_{idx}(0,3,0) \right) \\ \quad \cdots \quad else\, if\,(x = 1 \; and \; y = 0) \\ 4 \times \left( p_{idx}(0,0,0) - p_{idx}(0,1,0) - p_{idx}(0,2,0) + p_{idx}(0,3,0) \right) \\ \quad \cdots \quad else\, if\,(x = 2 \; and \; y = 0) \\ 4 \times \left( p_{idx}(0,0,0) - 2 \times p_{idx}(0,1,0) + 2 \times p_{idx}(0,2,0) - p_{idx}(0,3,0) \right) \\ \quad \cdots \quad else\, if\,(x = 3 \; and \; y = 0) \\ 0 \quad \cdots \quad else \end{cases}$$

(43B)

$$pT_{idx}(x,y) = \begin{cases} 4 \times \left( p_{idx}(1,0,0) + p_{idx}(1,0,1) + p_{idx}(1,0,2) + p_{idx}(1,0,3) \right) \\ \quad \cdots \quad if\,(x = 0 \; and \; y = 0) \\ 4 \times \left( 2 \times p_{idx}(1,0,0) + p_{idx}(1,0,1) - p_{idx}(1,0,2) - 2 \times p_{idx}(1,0,3) \right) \\ \quad \cdots \quad else\, if\,(x = 0 \; and \; y = 1) \\ 4 \times \left( p_{idx}(1,0,0) - p_{idx}(1,0,1) - p_{idx}(1,0,2) + p_{idx}(1,0,3) \right) \\ \quad \cdots \quad else\, if\,(x = 0 \; and \; y = 2) \\ 4 \times \left( p_{idx}(1,0,0) - 2 \times p_{idx}(1,0,1) + 2 \times p_{idx}(1,0,2) - p_{idx}(1,0,3) \right) \\ \quad \cdots \quad else\, if\,(x = 0 \; and \; y = 3) \\ 0 \quad \cdots \quad else \end{cases}$$

(45B)

$$DAC_{idx}(dir) =$$
$$\left( \sum_{x=0}^{3} \sum_{y=0}^{3} \left| g(x,y) \times \left( sT_{idx}(x,y) - pT_{idx}(x,y) \right) \right| - \left| g(0,0) \times \left( sT_{idx}(0,0) - pT_{idx}(0,0) \right) \right| \right) >> 1$$

(51B)

$$pT(x,y) =$$

$$\begin{pmatrix} 1 & 1 & 1 & 1 \\ 2 & 1 & -1 & -2 \\ 1 & -1 & -1 & 1 \\ 1 & -2 & 2 & -1 \end{pmatrix} \begin{pmatrix} p4_{idx}(dir,0,0) & p4_{idx}(dir,0,1) & p4_{idx}(dir,0,2) & p4_{idx}(dir,0,3) \\ p4_{idx}(dir,1,0) & p4_{idx}(dir,1,1) & p4_{idx}(dir,1,2) & p4_{idx}(dir,1,3) \\ p4_{idx}(dir,2,0) & p4_{idx}(dir,2,1) & p4_{idx}(dir,2,2) & p4_{idx}(dir,2,3) \\ p4_{idx}(dir,3,0) & p4_{idx}(dir,3,1) & p4_{idx}(dir,3,2) & p4_{idx}(dir,3,3) \end{pmatrix} \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

$$(55B)$$

$$pT_{idx}(x,y) =$$

$$\begin{pmatrix} 1 & 1 & 1 & 1 \\ 2 & 1 & -1 & -2 \\ 1 & -1 & -1 & 1 \\ 1 & -2 & 2 & -1 \end{pmatrix} \begin{pmatrix} p_{idx}(dir,0,0) & p_{idx}(dir,0,1) & p_{idx}(dir,0,2) & p_{idx}(dir,0,3) \\ p_{idx}(dir,1,0) & p_{idx}(dir,1,1) & p_{idx}(dir,1,2) & p_{idx}(dir,1,3) \\ p_{idx}(dir,2,0) & p_{idx}(dir,2,1) & p_{idx}(dir,2,2) & p_{idx}(dir,2,3) \\ p_{idx}(dir,3,0) & p_{idx}(dir,3,1) & p_{idx}(dir,3,2) & p_{idx}(dir,3,3) \end{pmatrix} \begin{pmatrix} 1 & 2 & 1 & 1 \\ 1 & 1 & -1 & -2 \\ 1 & -1 & -1 & 2 \\ 1 & -2 & 1 & -1 \end{pmatrix}$$

$$(56B)$$

$$g(i,j) = \begin{pmatrix} 1 & 3/5 & 1 & 3/5 \\ 3/5 & 2/5 & 3/5 & 2/5 \\ 1 & 3/5 & 1 & 3/5 \\ 3/5 & 2/5 & 3/5 & 2/5 \end{pmatrix} \qquad (59)$$

where g(i,j) is a parameter for gain correction on transformed components by integer-precision DCT of EQ.(58), and it is not limited to a value of EQ.(59). For example, if an encoder employs a quantizing matrix, the matrix may be incorporated into the value.

Moreover, while the embodiments above address a case in which transform used for SATD for use in intra-frame predictive direction estimation is Hadamard transform, the present invention may be applied to a case in which 4×4 DCT with N=4, EQ.(61), is employed in two-dimensional DCT as defined by EQ.(60):

$$T(u,v) = \frac{2}{N} C(u)C(v) \sum_{x=0}^{N-1} \sum_{y=0}^{N-1} e(x,y) \cos\frac{(2x+1)u\pi}{2N} \cos\frac{(2y+1)v\pi}{2N}$$

$$C(u), C(v) = \begin{cases} \dfrac{1}{\sqrt{2}} & \text{for u v} = 0 \\ 1 & \text{otherwise} \end{cases}$$

$$(60)$$

$$T = \frac{1}{2}\begin{pmatrix} 1/\sqrt{2} & 1/\sqrt{2} & 1/\sqrt{2} & 1/\sqrt{2} \\ \cos\frac{\pi}{8} & \cos\frac{3\pi}{8} & \cos\frac{5\pi}{8} & \cos\frac{7\pi}{8} \\ \cos\frac{2\pi}{8} & \cos\frac{6\pi}{8} & \cos\frac{10\pi}{8} & \cos\frac{14\pi}{8} \\ \cos\frac{3\pi}{8} & \cos\frac{9\pi}{8} & \cos\frac{15\pi}{8} & \cos\frac{21\pi}{8} \end{pmatrix} \begin{pmatrix} e(0,0) & e(0,1) & e(0,2) & e(0,3) \\ e(1,0) & e(1,1) & e(1,2) & e(1,3) \\ e(2,0) & e(2,1) & e(2,2) & e(2,3) \\ e(3,0) & e(3,1) & e(3,2) & e(3,3) \end{pmatrix} \begin{pmatrix} 1/\sqrt{2} & \cos\frac{\pi}{8} & \cos\frac{2\pi}{8} & \cos\frac{3\pi}{8} \\ 1/\sqrt{2} & \cos\frac{3\pi}{8} & \cos\frac{6\pi}{8} & \cos\frac{9\pi}{8} \\ 1/\sqrt{2} & \cos\frac{5\pi}{8} & \cos\frac{10\pi}{8} & \cos\frac{15\pi}{8} \\ 1/\sqrt{2} & \cos\frac{7\pi}{8} & \cos\frac{14\pi}{8} & \cos\frac{21\pi}{8} \end{pmatrix}$$

$$= \frac{1}{2}\begin{pmatrix} 1/\sqrt{2} & 1/\sqrt{2} & 1/\sqrt{2} & 1/\sqrt{2} \\ \cos\frac{\pi}{8} & \cos\frac{3\pi}{8} & -\cos\frac{3\pi}{8} & -\cos\frac{\pi}{8} \\ \cos\frac{\pi}{4} & -\cos\frac{\pi}{4} & -\cos\frac{\pi}{4} & \cos\frac{\pi}{4} \\ \cos\frac{3\pi}{8} & -\cos\frac{\pi}{8} & \cos\frac{\pi}{8} & -\cos\frac{3\pi}{8} \end{pmatrix} \begin{pmatrix} e(0,0) & e(0,1) & e(0,2) & e(0,3) \\ e(1,0) & e(1,1) & e(1,2) & e(1,3) \\ e(2,0) & e(2,1) & e(2,2) & e(2,3) \\ e(3,0) & e(3,1) & e(3,2) & e(3,3) \end{pmatrix} \begin{pmatrix} 1/\sqrt{2} & \cos\frac{\pi}{8} & \cos\frac{\pi}{4} & \cos\frac{3\pi}{8} \\ 1/\sqrt{2} & \cos\frac{3\pi}{8} & -\cos\frac{\pi}{4} & -\cos\frac{\pi}{8} \\ 1/\sqrt{2} & -\cos\frac{3\pi}{8} & -\cos\frac{\pi}{4} & \cos\frac{\pi}{8} \\ 1/\sqrt{2} & -\cos\frac{\pi}{8} & \cos\frac{\pi}{4} & -\cos\frac{3\pi}{8} \end{pmatrix}$$

$$(61)$$

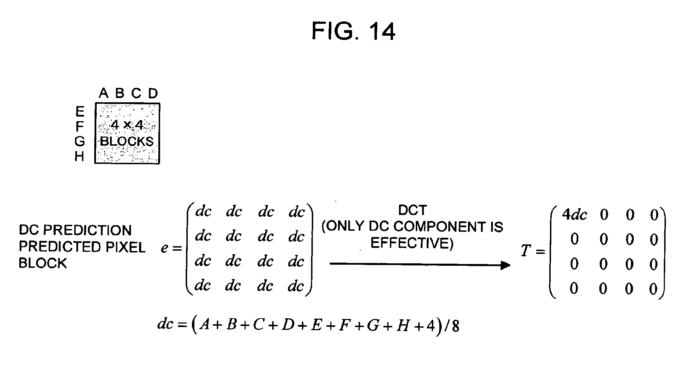

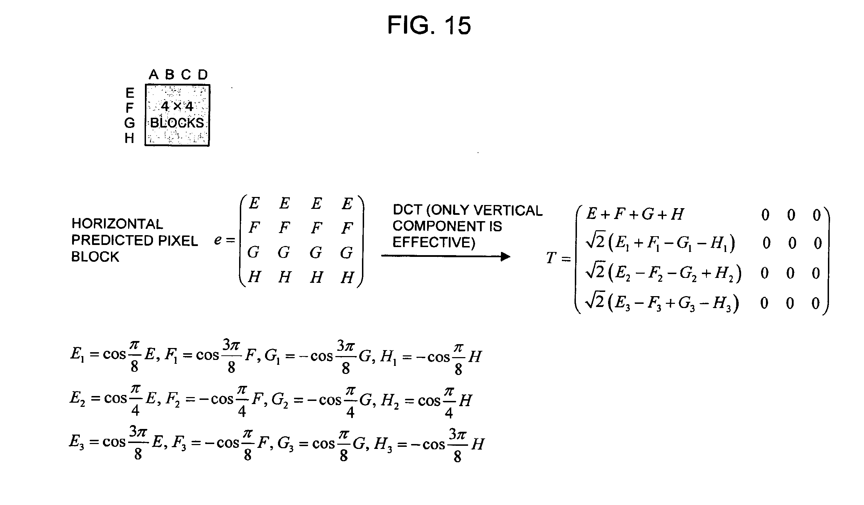

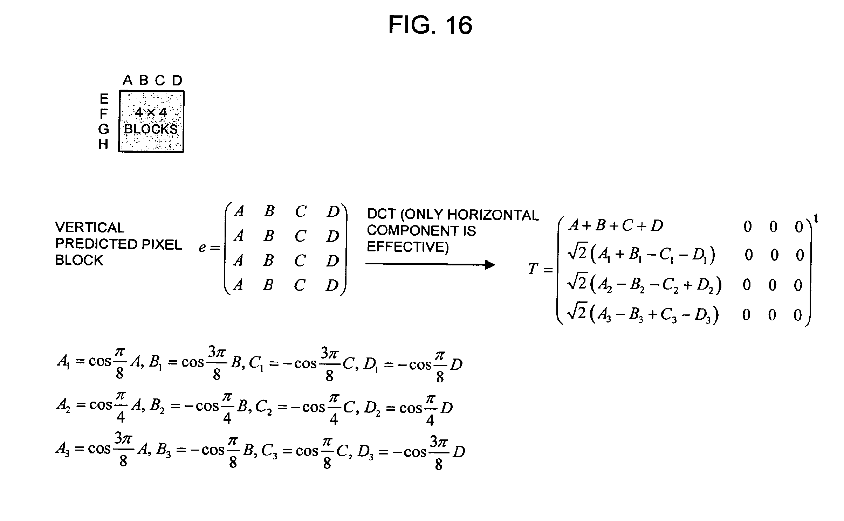

This is because the transform coefficients in DCT of an effective component are dependent upon the gradients of predicted pixels, as shown in FIGs. 14 - 16, similarly to the transform coefficients in Hadamard transform shown in FIG. 6.

Furthermore, while it is possible to configure the embodiments above using hardware, they may be implemented using a computer program, as evident from the preceding description.

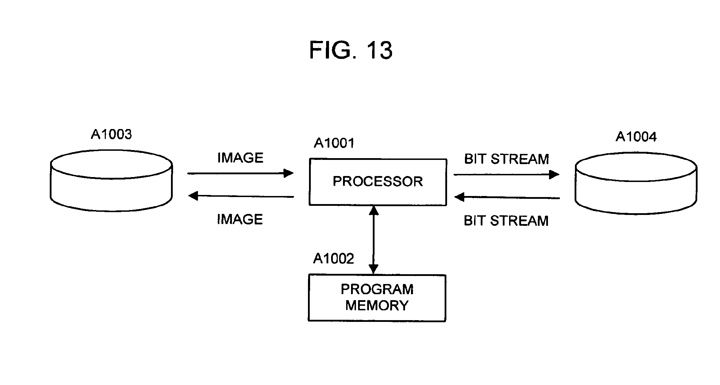

FIG. 13 shows a general block configuration diagram of an information processing system in which a moving picture encoding apparatus is implemented according to the present invention.

The information processing system shown in FIG. 13 consists of a processor A1001, a program memory A1002, and storage media A1003 and A1004. The storage media A1003 and A1004 may be separate storage media or storage regions in the same storage medium. A storage medium that may be employed is a magnetic one such as a hard disk.

**Claims**

1. An image encoding apparatus for dividing an image frame into a plurality of pixel blocks each having N×M pixels comprises N horizontal pixels and M vertical pixels, and performing intra-frame prediction in a spatial domain on each of said divided pixel blocks using adjacent pixels reconstructed in the past, said apparatus **characterized in** comprising:

   transforming means for transforming an input pixel block having N×M pixels into N×M transform coefficients; locally transforming means for locally transforming an intra-frame predicted pixel block having N×M pixels based on the property of intra-frame prediction; and
   detecting means for detecting the best intra-frame predictive direction by comparing the transform coefficients of said input pixel block with the transform coefficients of an intra-frame predicted pixel block in each intra-frame predictive direction.

2. The image encoding apparatus as defined by claim 1, **characterized in that**:

   when said property of intra-frame prediction is a direction of intra-frame prediction, said locally transforming means locally transforms:
   an intra-frame predicted pixel block having N×M pixels into N horizontal component transform coefficients if said direction of intra-frame prediction is vertical;
   an intra-frame predicted pixel block having NxM pixels into M vertical component transform coefficients if said direction of intra-frame prediction is horizontal; and
   an intra-frame predicted pixel block having NxM pixels into one DC component transform coefficient if said direction of intra-frame prediction is flat.

3. The image encoding apparatus as defined by claim 1,
**characterized in that**:

when said property of intra-frame prediction is a pixel value of a predicted pixel in an intra-frame predicted pixel block, said locally transforming means locally transforms:
an intra-frame predicted pixel block having NxM pixels into N horizontal component transform coefficients if said pixel values are identical in a vertical direction;
an intra-frame predicted pixel block having $N\times M$ pixels into M vertical component transform coefficients if said pixel values are identical in a horizontal direction; and
an intra-frame predicted pixel block having NxM pixels into one DC component transform coefficient if all said pixel values are identical.

4. The image encoding apparatus as defined by claim 1, **characterized in that**:

said transforming means performs transform using DCT, integer-precision DCT, or Hadamard transform.

5. An image encoding apparatus for dividing an input image frame into a plurality of pixel blocks each having $N\times M$ pixels comprising N horizontal pixels and M vertical pixels, and performing intra-frame prediction in a spatial domain on each of said pixel blockshaving $N\times M$ pixels using adjacent pixels reconstructed in the past, said apparatus **characterized in** comprising:

transforming means for transforming said input pixel block having $N\times M$ pixels into $N\times M$ transform coefficients;
first locally transforming means for locally transforming an intra-frame predicted pixel block having $N\times M$ pixels with a vertical intra-frame predictive direction into N horizontal component transform coefficients;
second locally transforming means for locally transforming an intra-frame predicted pixel block having $N\times M$ pixels with a horizontal intra-frame predictive direction into M vertical component transform coefficients;
third locally transforming means for locally transforming an intra-frame predicted pixel block having $N\times M$ pixels with a flat intra-frame predictive direction into one DC component transform coefficient; and
detecting means for detecting the best intra-frame predictive direction by comparing the transform coefficients of said input pixel block with the transform coefficients of an intra-frame predicted pixel block in each intra-frame predictive direction.

6. The image encoding apparatus as defined by claim 5,
**characterized in that**:

said transforming means performs transform using DCT, integer-precision DCT, or Hadamard transform.

7. An image encoding apparatus for dividing an input image frame into a plurality of pixel blocks each having $N\times M$ pixels comprising N horizontal pixels and M vertical pixels, and performing intra-frame prediction in a spatial domain on each of said pixel blocks having $N\times M$ pixels using adjacent pixels reconstructed in the past, said apparatus **characterized in** comprising:

transforming means for transforming said input pixel block having NxM pixels into $N\times M$ transform coefficients;
first locally transforming means for locally transforming an intra-frame predicted pixel block having $N\times M$ pixels whose pixel values of predicted pixels are identical in a vertical direction into N horizontal component transform coefficients;
second locally transforming means for locally transforming an intra-frame predicted pixel block having $N\times M$ pixels whose pixel values of predicted pixels are identical in a horizontal direction into M vertical component transform coefficients;
third locally transforming means for locally transforming an intra-frame predicted pixel block having $N\times M$ pixels whose pixel values of predicted pixels are all identical into one DC component transform coefficient; and
detecting means for detecting the best intra-frame predictive direction by comparing the transform coefficients of said input pixel block with the transform coefficients of an intra-frame predicted pixel block in each intra-frame predictive direction.

8. The image encoding apparatus as defined by claim 7, **characterized in that**:

said transforming means performs transform using DCT, integer-precision DCT, or Hadamard transform.

**9.** An image encoding method of dividing an image frame into a plurality of pixel blocks each having N×M pixels comprising N horizontal pixels and M vertical pixels, and performing intra-frame prediction in a spatial domain on each of said divided pixel blocks using adjacent pixels reconstructed in the past, said method **characterized in** comprising:

a transforming step of transforming an input pixel block having N×M pixels into N×M transform coefficients;
a locally transforming step of locally transforming an intra-frame predicted pixel block having N×M pixels based on the property of intra-frame prediction; and
a detecting step of detecting the best intra-frame predictive direction by comparing the transform coefficients of said input pixel block with the transform coefficients of an intra-frame predicted pixel block in each intra-frame predictive direction.

**10.** The image encoding method as defined by claim 9,
**characterized in that**:

when said property of intra-frame prediction is a direction of intra-frame prediction, said locally transforming step comprises:
locally transforming an intra-frame predicted pixel block having NxM pixels into N horizontal component transform coefficients if said direction of intra-frame prediction is vertical;
locally transforming an intra-frame predicted pixel block having NxM pixels into M vertical component transform coefficients if said direction of intra-frame prediction is horizontal; and
locally transforming an intra-frame predicted pixel block having N×M pixels into one DC component transform coefficient if said direction of intra-frame prediction is flat.

**11.** The image encoding method as defined by claim 9, **characterized in that**:

when said property of intra-frame prediction is a pixel value of a predicted pixel in an intra-frame predicted pixel block, said locally transforming step comprises:
locally transforming an intra-frame predicted pixel block having N×M pixels into N horizontal component transform coefficients if said pixel values are identical in a vertical direction;
locally transforming an intra-frame predicted pixel block having N×M pixels into M vertical component transform coefficients if said pixel values are identical in a horizontal direction; and
locally transforming an intra-frame predicted pixel block having N×M pixels into one DC component transform coefficient when all said pixel values are identical.

**12.** The image encoding method as defined by claim 9, **characterized in that**:

said transforming step comprises a step of performing transform using DCT, integer-precision DCT, or Hadamard transform.

**13.** An image encoding method of dividing an input image frame into a plurality of pixel blocks each having N×M pixels comprising N horizontal pixels and M vertical pixels, and performing intra-frame prediction in a spatial domain on each of said pixel blocks having NxM pixels using adjacent pixels reconstructed in the past, said method **characterized in** comprising:

a transforming step of transforming an input pixel block having N×M pixels into N×M transform coefficients;
a first locally transforming step of locally transforming an intra-frame predicted pixel block having N×M pixels with a vertical intra-frame predictive direction into N horizontal component transform coefficients;
a second locally transforming step of locally transforming an intra-frame predicted pixel block having N×M pixels with a horizontal intra-frame predictive direction into M vertical component transform coefficients;
a third locally transforming step of locally transforming an intra-frame predicted pixel block having N×M pixels with a flat intra-frame predictive direction into one DC component transform coefficient; and
a detecting step of detecting the best intra-frame predictive direction by comparing the transform coefficients of said input pixel block with the transform coefficients of an intra-frame predicted pixel block in each intra-frame predictive direction.

**14.** The image encoding method as defined by claim 13, **characterized in that**:

said transforming step comprises a step of performing transform using DCT, integer-precision DCT, or Hadamard transform.

**15.** An image encoding method of dividing an input image frame into a plurality of pixel blocks each having N×M pixels comprising N horizontal pixels and M vertical pixels, and performing intra-frame prediction in a spatial domain on each of said pixel blockshaving N×M pixels using adjacent pixels reconstructed in the past, said method **characterized in** comprising:

a transforming step of transforming an input pixel block having N×M pixels into N×M transform coefficients;
a first locally transforming step of locally transforming an intra-frame predicted pixel block having N×M pixels whose pixel values of predicted pixels are identical in a vertical direction into N horizontal component transform coefficients;
a second locally transforming step of locally transforming an intra-frame predicted pixel block having NxM pixels whose pixel values of predicted pixels are identical in a horizontal direction into M vertical component transform coefficients;
a third locally transforming step of locally transforming an intra-frame predicted pixel block having N×M pixels whose pixel values of predicted pixels are all identical into one DC component transform coefficient; and
a detecting step of detecting the best intra-frame predictive direction by comparing the transform coefficients of said input pixel block with the transform coefficients of an intra-frame predicted pixel block in each intra-frame predictive direction.

**16.** The image encoding method as defined by claim 15, **characterized in that**:

said transforming step comprises a step of performing transform using DCT, integer-precision DCT, or Hadamard transform.

**17.** A program for an image encoding apparatus for dividing an image frame into a plurality of pixel blocks each having N×M pixels comprising N horizontal pixels, and M vertical pixels, and performing intra-frame prediction in a spatial domain on each of said divided pixel blocks using adjacent pixels reconstructed in the past, said program **characterized in** causing said image encoding apparatus to function as:

transforming means for transforming an input pixel block having N×M pixels into N×M transform coefficients;
locally transforming means for locally transforming an intra-frame predicted pixel block having N×M pixels based on the property of intra-frame prediction; and
detecting means for detecting the best intra-frame predictive direction by comparing the transform coefficients of said input pixel block with the transform coefficients of an intra-frame predicted pixel block in each intra-frame predictive direction.

**18.** The program as defined by claim 17, **characterized in that**:

when said property of intra-frame prediction is a direction of intra-frame prediction, said locally transforming means is caused to function as locally transforming means that locally transforms:
an intra-frame predicted pixel block having NxM pixels into N horizontal component transform coefficients if said direction of intra-frame prediction is vertical;
an intra-frame predicted pixel block having N×M pixels into M vertical component transform coefficients if said direction of intra-frame prediction is horizontal; and
an intra-frame predicted pixel block having N×M pixels into one DC component transform coefficient if said direction of intra-frame prediction is flat.

**19.** The program as defined by claim 17, **characterized in that**:

when said property of intra-frame prediction is a pixel value of a predicted pixel in an intra-frame predicted pixel block, said locally transforming means is caused to function as locally transforming means that locally transforms:
an intra-frame predicted pixel block having N×M pixels into N horizontal component transform coefficients if said pixel values are identical in a vertical direction;
an intra-frame predicted pixel block having N×M pixels into M vertical component transform coefficients if said pixel values are identical in a horizontal direction; and
an intra-frame predicted pixel block having N×M pixels into one DC component transform coefficient when all said pixel values are identical.

20. The program as defined by claim 17, **characterized in that**:

said transforming means is caused to function as transforming means for performing transform using DCT, integer-precision DCT, or Hadamard transform.

21. A program for an image encoding apparatus for dividing an input image frame into a plurality of pixel blocks each having N×M pixels comprising N horizontal pixels and M vertical pixels, and performing intra-frame prediction in a spatial domain on each of said pixel blocks having N×M pixels using adjacent pixels reconstructed in the past, said program **characterized in** causing said image encoding apparatus to function as:

transforming means for transforming said input pixel block having N×M pixels into N×M transform coefficients;
first locally transforming means for locally transforming an intra-frame predicted pixel block having N×M pixels with a vertical intra-frame predictive direction into N horizontal component transform coefficients;
second locally transforming means for locally transforming an intra-frame predicted pixel block having N×M pixels with a horizontal intra-frame predictive direction into M vertical component transform coefficients;
third locally transforming means for locally transforming an intra-frame predicted pixel block having N×M pixels with a flat intra-frame predictive direction into one DC component transform coefficient; and
detecting means for detecting the best intra-frame predictive direction by comparing the transform coefficients of said input pixel block with the transform coefficients of an intra-frame predicted pixel block in each intra-frame predictive direction.

22. The program as defined by claim 21, **characterized in that**:

said transforming means is caused to function as transforming means for performing transform using DCT, integer-precision DCT, or Hadamard transform.

23. A program for an image encoding apparatus for dividing an input image frame into a plurality of pixel blocks each having comprising N horizontal pixels and M vertical pixels, and performing intra-frame prediction in a spatial domain on each of said pixel blockshaving N×M pixels using adjacent pixels reconstructed in the past, said program **characterized in** causing said image encoding apparatus to function as:

transforming means for transforming an input pixel block having N×M pixels into N×M transform coefficients;
first locally transforming means for locally transforming an intra-frame predicted pixel block having N×M pixels whose pixel values of predicted pixels are identical in a vertical direction into N horizontal component transform coefficients;
second locally transforming means for locally transforming an intra-frame predicted pixel block having N×M pixels whose pixel values of predicted pixels are identical in a horizontal direction into M vertical component transform coefficients;
third locally transforming means for locally transforming an intra-frame predicted pixel block having N×M pixels whose pixel values of predicted pixels are all identical into one DC component transform coefficient; and
detecting means for detecting the best intra-frame predictive direction by comparing the transform coefficients of said input pixel block with the transform coefficients of an intra-frame predicted pixel block in each intra-frame predictive direction.

24. The program as defined by claim 23, **characterized in that**:

said transforming means is caused to function as transforming means for performing transform using DCT, integer-precision DCT, or Hadamard transform.

FIG. 1

176

144

16

16

16

4

4

i

IMAGE FRAME (QCIF)          MB          4x4 BLOCK

EP 1 833 259 A1

FIG. 2

# FIG. 3

PREDICTED VALUE

| 0 | 0 | 0 | 0 |
|---|---|---|---|
| 0 | 0 | 0 | 0 |
| 0 | 0 | 0 | 0 |
| 0 | 0 | 0 | 0 |

ORIGINAL IMAGE

| 255 | 255 | 255 | 255 |
|-----|-----|-----|-----|
| 255 | 255 | 255 | 255 |
| 255 | 255 | 255 | 255 |
| 255 | 255 | 255 | 255 |

PREDICTIVE ERROR

| 255 | 255 | 255 | 255 |
|-----|-----|-----|-----|
| 255 | 255 | 255 | 255 |
| 255 | 255 | 255 | 255 |
| 255 | 255 | 255 | 255 |

TRANSFORM

TRANSFORM COEFFICIENTS

| 4080 | 0 | 0 | 0 |
|------|---|---|---|
| 0 | 0 | 0 | 0 |
| 0 | 0 | 0 | 0 |
| 0 | 0 | 0 | 0 |

REFERENCE FRAME
TIME t-1

INPUT FRAME TO BE ENCODED
TIME t

ENERGY CONCENTRATION =
GOOD CODING EFFICIENCY

EP 1 833 259 A1

38

FIG. 4

FIG. 5

VERTICAL PREDICTION
(pred16dir=0)

HORIZONTAL PREDICTION
(pred16dir=1)

DC PREDICTION
(pred16dir=2)

AVERAGE
VALUE

PLANE PREDICTION
(pred16dir=3)

EP 1 833 259 A1

# FIG. 6

A B C D  
E F G H  
4×4 BLOCKS

**DC PREDICTION PREDICTED PIXEL BLOCK**

$$p = \begin{pmatrix} dc & dc & dc & dc \\ dc & dc & dc & dc \\ dc & dc & dc & dc \\ dc & dc & dc & dc \end{pmatrix}$$

LOCAL CALCULATION OF TRANSFORM COEFFICIENTS (DIRECT CURRENT (DC) COMPONENT) $\longrightarrow$

$$Tp = \begin{pmatrix} 16dc & 0 & 0 & 0 \\ 0 & 0 & 0 & 0 \\ 0 & 0 & 0 & 0 \\ 0 & 0 & 0 & 0 \end{pmatrix}$$

$$dc = (A + B + C + D + E + F + G + H + 4)/8$$

**HORIZONTAL PREDICTED PIXEL BLOCK**

$$p = \begin{pmatrix} E & E & E & E \\ F & F & F & F \\ G & G & G & G \\ H & H & H & H \end{pmatrix}$$

LOCAL CALCULATION OF TRANSFORM COEFFICIENTS (VERTICAL COMPONENT) $\longrightarrow$

$$Tp = 4\begin{pmatrix} E+F+G+H & 0 & 0 & 0 \\ E+F-G-H & 0 & 0 & 0 \\ E-F-G+H & 0 & 0 & 0 \\ E-F+G-H & 0 & 0 & 0 \end{pmatrix}$$

**VERTICAL PREDICTED PIXEL BLOCK**

$$p = \begin{pmatrix} A & B & C & D \\ A & B & C & D \\ A & B & C & D \\ A & B & C & D \end{pmatrix}$$

LOCAL CALCULATION OF TRANSFORM COEFFICIENTS (HORIZONTAL COMPONENT) $\longrightarrow$

$$Tp = 4\begin{pmatrix} A+B+C+D & A+B-C-D & A-B-C+D & A-B+C-D \\ 0 & 0 & 0 & 0 \\ 0 & 0 & 0 & 0 \\ 0 & 0 & 0 & 0 \end{pmatrix}$$

## FIG. 7

200 INTRA-FRAME PREDICTIVE DIRECTION ESTIMATION

INPUT MB | + | − | PREDICTED VALUE | 108 | INTRA-FRAME PREDICTION

RECONSTRUCTED IMAGE

PREDICTIVE ERROR

PREDICTIVE ERROR HADAMARD TRANSFORM COEFFICIENT

ESTIMATED PREDICTIVE DIRECTION/ESTIMATED INTRA-MB TYPE

HADAMARD TRANSFORM
2002

CONTROLLER
2001

MINIMUM PREDICTIVE DIRECTION COST/INTRA-MB TYPE COST/BEST INTRA-FRAME PREDICTIVE DIRECTION/BEST INTRA-MB TYPE

QUANTIZING PARAMETER

2003

INTRA-FRAME PREDICTION SEARCH MEMORY

PREDICTIVE DIRECTION SELECTION/INTRA-MB TYPE SELECTION
2004

PREDICTIVE DIRECTION/INTRA-MB TYPE/INTRA-MB TYPE COST

EP 1 833 259 A1

# FIG. 8

2000 INTRA-FRAME PREDICTIVE DIRECTION SEARCH

PREDICTIVE DIRECTION/INTRA-MB TYPE/INTRA-MB TYPE COST

EP 1 833 259 A1

# FIG. 9

START INTRA-FRAME
PREDICTIVE DIRECTION
ESTIMATION

S1000A

TRANSFORM INPUT IMAGE

S1001A

INITIALIZE VARIANTS 1
idx=0, intra4cost=24 $\lambda$

S1002A

Idx<16? — NO

S1003A YES

INITIALIZE VARIANT 2
dir=0, MinB4Cost(idx)=∞,
Pred4dir(idx)=2

S1004A

dir<9?

YES

NO ↓ S1009A

Idx++;
UPDATE
Intra4cost

S1002A

S1005A

DECIDE
POSSIBILITY OF LOCAL
TRANSFORM COEFFICIENT
GENERATION 1

S1006A

CALCULATE
B4Cost 1

S1007A

CALCULATE
B4Cost 2

S1008A

UPDATE Minb4Cost;
UPDATE Pred4dir(idx)
dir++

S1010A

INITIALIZE VARIANT 3
intra16cost=∞,
dir=0, dir16=2

S1011A

dir<4? — NO

YES

S1012A

DECIDE
POSSIBILITY OF LOCAL
TRANSFORM COEFFICIENT
GENERATION 2

S1013A

CALCULATE
B16Cost 1

S1014A

CALCULATE
B16Cost 2

S1015A

UPDATE intra16Cost;
UPDATE dir16;
dir++

S1016A

CALCULATE IntraMBCost;
CALCULATE IntraMBtype;
DETERMINE PREDICTIVE
DIRECTION

END INTRA-FRAME
PREDICTIVE DIRECTION
ESTIMATION

FIG. 10

200 INTRA-FRAME PREDICTIVE DIRECTION SEARCH/MB TYPE DECISION

RECONSTRUCTED IMAGE

2005 LOCAL TRANSFORM COEFFICIENT GENERATION

2008 PREDICTIVE TRANSFORM COEFFICIENT GENERATION

ESTIMATED PREDICTIVE DIRECTION/ESTIMATED INTRA-MB TYPE

SW2007 SWITCH

INPUT MB

2002 HADAMARD TRANSFORM

2006 INPUT HADAMARD TRANSFORM COEFFICIENT MEMORY

PREDICTIVE ERROR HADAMARD TRANSFORM COEFFICIENT

2001 CONTROLLER

QUANTIZING PARAMETER

MINIMUM PREDICTIVE DIRECTION COST/INTRA-MB TYPE COST/BEST INTRA-FRAME PREDICTIVE DIRECTION/BEST INTRA-MB TYPE

INTRA-FRAME PREDICTION SEARCH MEMORY

2003

2004 PREDICTIVE DIRECTION SELECTION/INTRA-MB TYPE SELECTION

PREDICTIVE DIRECTION/INTRA-MB TYPE/INTRA-MB TYPE COST

45

## FIG. 11

2008  PREDICTIVE TRANSFORM COEFFICIENT GENERATION

PREDICTIVE HADAMARD TRANSFORM COEFFICIENT ← **HADAMARD TRANSFORM** 2002 ← PREDICTED VALUE ← **INTRA-FRAME PREDICTION** 108 ← RECONSTRUCTED IMAGE

↑ PREDICTIVE DIRECTION/INTRA-MB TYPE

EP 1 833 259 A1

# FIG. 12

200 INTRA-FRAME PREDICTIVE DIRECTION ESTIMATION

PREDICTIVE DIRECTION/INTRA-MB TYPE/INTRA-MB TYPE COST

RECONSTRUCTED IMAGE

FIG. 13

A1003

A1001

A1004

IMAGE

BIT STREAM

PROCESSOR

IMAGE

BIT STREAM

A1002

PROGRAM
MEMORY

EP 1 833 259 A1

# FIG. 14

DC PREDICTION
PREDICTED PIXEL
BLOCK

$$e = \begin{pmatrix} dc & dc & dc & dc \\ dc & dc & dc & dc \\ dc & dc & dc & dc \\ dc & dc & dc & dc \end{pmatrix}$$

DCT
(ONLY DC COMPONENT IS
EFFECTIVE)

$$T = \begin{pmatrix} 4dc & 0 & 0 & 0 \\ 0 & 0 & 0 & 0 \\ 0 & 0 & 0 & 0 \\ 0 & 0 & 0 & 0 \end{pmatrix}$$

$$dc = (A + B + C + D + E + F + G + H + 4)/8$$

EP 1 833 259 A1

FIG. 15

A B C D

E
F   4×4
G   BLOCKS
H

HORIZONTAL
PREDICTED PIXEL
BLOCK

$$e = \begin{pmatrix} E & E & E & E \\ F & F & F & F \\ G & G & G & G \\ H & H & H & H \end{pmatrix}$$

DCT (ONLY VERTICAL
COMPONENT IS
EFFECTIVE)
⟶

$$T = \begin{pmatrix} E+F+G+H & 0 & 0 & 0 \\ \sqrt{2}\left(E_1 + F_1 - G_1 - H_1\right) & 0 & 0 & 0 \\ \sqrt{2}\left(E_2 - F_2 - G_2 + H_2\right) & 0 & 0 & 0 \\ \sqrt{2}\left(E_3 - F_3 + G_3 - H_3\right) & 0 & 0 & 0 \end{pmatrix}$$

$$E_1 = \cos\frac{\pi}{8}E,\ F_1 = \cos\frac{3\pi}{8}F,\ G_1 = -\cos\frac{3\pi}{8}G,\ H_1 = -\cos\frac{\pi}{8}H$$

$$E_2 = \cos\frac{\pi}{4}E,\ F_2 = -\cos\frac{\pi}{4}F,\ G_2 = -\cos\frac{\pi}{4}G,\ H_2 = \cos\frac{\pi}{4}H$$

$$E_3 = \cos\frac{3\pi}{8}E,\ F_3 = -\cos\frac{\pi}{8}F,\ G_3 = \cos\frac{\pi}{8}G,\ H_3 = -\cos\frac{3\pi}{8}H$$

EP 1 833 259 A1

# FIG. 16

VERTICAL PREDICTED PIXEL BLOCK

$$e = \begin{pmatrix} A & B & C & D \\ A & B & C & D \\ A & B & C & D \\ A & B & C & D \end{pmatrix}$$

DCT (ONLY HORIZONTAL COMPONENT IS EFFECTIVE) $\longrightarrow$

$$T = \begin{pmatrix} A+B+C+D & 0 & 0 & 0 \\ \sqrt{2}\left(A_1 + B_1 - C_1 - D_1\right) & 0 & 0 & 0 \\ \sqrt{2}\left(A_2 - B_2 - C_2 + D_2\right) & 0 & 0 & 0 \\ \sqrt{2}\left(A_3 - B_3 + C_3 - D_3\right) & 0 & 0 & 0 \end{pmatrix}^{t}$$

$$A_1 = \cos\frac{\pi}{8}A,\ B_1 = \cos\frac{3\pi}{8}B,\ C_1 = -\cos\frac{3\pi}{8}C,\ D_1 = -\cos\frac{\pi}{8}D$$

$$A_2 = \cos\frac{\pi}{4}A,\ B_2 = -\cos\frac{\pi}{4}B,\ C_2 = -\cos\frac{\pi}{4}C,\ D_2 = \cos\frac{\pi}{4}D$$

$$A_3 = \cos\frac{3\pi}{8}A,\ B_3 = -\cos\frac{\pi}{8}B,\ C_3 = \cos\frac{\pi}{8}C,\ D_3 = -\cos\frac{3\pi}{8}D$$

EP 1 833 259 A1

## INTERNATIONAL SEARCH REPORT

| | International application No. |
|---|---|
| | PCT/JP2005/023080 |

A. CLASSIFICATION OF SUBJECT MATTER
*H04N7/32*(2006.01)

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-241957 A (Sony Corp.), 26 August, 2004 (26.08.04), Full text; all drawings (Family: none) | 1-24 |
| A | JP 8-84337 A (Texas Instruments Inc.), 26 March, 1996 (26.03.96), Full text; all drawings & US 5815602 A | 1-24 |
| A | JP 2000-78589 A (Sony Corp.), 14 March, 2000 (14.03.00), Full text; all drawings & US 2002/015513 A1 & CN 1243393 A & KR 2000-11728 A | 1-24 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 February, 2006 (10.02.06) | 21 February, 2006 (21.02.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## INTERNATIONAL SEARCH REPORT

| International application No. |
| --- |
| PCT/JP2005/023080 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-222587 A  (Matsushita Electric Industrial Co., Ltd.), 11 August, 2000 (11.08.00), Full text; all drawings & US 6625216 B1          & EP 1024456 A2 & CN 1262496 A          & KR 2000-76522 A & TW 224290 B1 | 1-24 |
| A | WO 2001/054416 A1  (NOKIA MOBILE PHONES LTD.), 26 July, 2001 (26.07.01), Full text; all drawings & JP 2003-520531 A       & US 2001/17942 A1 & EP 1249132 A1          & CN 1418436 A & KR 2002-77888 A       & AU 2001-30276 A & BR 2001-107706 A      & ZA 2002-5506 A | 1-24 |
| E,A | JP 2005-348280 A  (Nippon Telegraph And Telephone Corp.), 15 December, 2005 (15.12.05), Full text; all drawings (Family: none) | 1-24 |
| E,A | JP 2006-5659 A  (Canon Inc.), 05 January, 2006 (05.01.06), Full text; all drawings (Family: none) | 1-24 |

Form PCT/ISA/210 (continuation of second sheet) (April 2005)

**REFERENCES CITED IN THE DESCRIPTION**

**Patent documents cited in the description**

- JP 2004229315 A

- JP 2000078589 A